# EUROPÄISCHE PATENTSCHRIFT

(11) **EP 0 925 690 B1**
(45) Veröffentlichungstag und Bekanntmachung des Hinweises auf die Patenterteilung: **03.07.2002**
(21) Anmeldenummer: 98906907.5
(22) Anmeldetag: 03.02.1998
(51) Int. Cl.: H04N 9/31, H04N 5/74

(54) **VERFAHREN UND VORRICHTUNG ZUR DARSTELLUNG EINES VIDEOBILDES SOWIE EIN HERSTELLUNGSVERFAHREN FÜR DIE VORRICHTUNG**
METHOD AND DEVICE FOR DISPLAYING A VIDEO IMAGE AND METHOD FOR THE PRODUCTION OF SAID DEVICE
PROCEDE ET DISPOSITIF POUR REPRESENTER UNE IMAGE VIDEO, AINSI QUE PROCEDE DE FABRICATION DE CE DISPOSITIF

(30) Priorität: 24.06.1997 DE 19726860
(43) Veröffentlichungstag der Anmeldung: 30.06.1999
(73) Patentinhaber: Schneider Laser Technologies Aktiengesellschaft, 07548 Gera (DE)
(72) Erfinder: DETER, Christhard, D-07546 Gera (DE); HILLER, Klaus, D-07551 Gera (DE); VOGEL, Wolfgang, D-07747 Jena (DE); FROST, Holger, D-07548 Gera (DE)
(74) Vertreter: Geyer, Werner, Dr.-Ing.
(86) Internationale Anmeldenummer: EP9800564
(87) Internationale Veröffentlichungsnummer: WO9859500

(56) Entgegenhaltungen:
- WO-A-94/18802
- WO-A-95/03676
- WO-A-95/10159
- DE-A- 4 139 842
- FR-A- 2 460 081
- PATENT ABSTRACTS OF JAPAN vol. 9, no. 156 (P-368), 29.Juni 1985 & JP 60 032019 A (YOSHIAKI MATSUNAGA)

## Beschreibung

Die Erfindung bezieht sich auf eine Vorrichtung zur Darstellung eines Videobildes mit einer mindestens ein intensitätsmoduliertes Lichtbündel emittierenden Quelle sowie einer Ablenkeinrichtung zum Ablenken des Lichtbündels, sowohl zum winkelproportionalen Rastern von Nₚ Bildpunkten in Zeilen über einen Winkel αₚ als auch zum winkelproportionalen Rastem des Lichtbündels von N_{z} Zeilen des Videobildes über einen Winkel α_{z}. Weiter bezieht sich die Erfindung auf ein Herstellungsverfahren für eine derartige Vorrichtung, für die eine mindestens ein intensitätsmoduliertes Lichtbündel emittierende Quelle sowie eine Ablenkeinrichtung, sowohl zum winkelproportionalen Rastern von Nₚ Bildpunkten in Zeilen über einen Winkel αₚ als auch zum winkelproportionalen Rastem von N_{z} Zeilen des Videobildes über einen Winkel α_{z} des Lichtbündels, vorgesehen werden. Außerdem bezieht sich die Erfindung auf ein Verfahren zur Darstellung eines Videobildes, bei dem mindestens ein intensitätsmoduliertes Lichtbündel aus einer Quelle emittiert sowie mittels einer Ablenkeinrichtung, sowohl zum winkelproportionalen Rastern von Nₚ Bildpunkten in Zeilen über einen Winkel αₚ als auch zum winkelproportionalen Rastern von N_{z} Zeilen des Bildes über einen Winkel α_{z}, abgelenkt wird.

Wenn im folgenden von "Quelle" gesprochen wird, ist damit nicht nur ein einziger Lichterzeuger, sondern auch jede Kombination verschiedener Lichtquellen in beliebiger Anordnung gemeint.

Vorrichtungen gemäß der obigen Angabe sind beispielsweise aus der DE 43 24 848 C1 bekannt. Bei derartigen Vorrichtungen werden in Entsprechung zum Elektronenstrahl beim herkömmlichen Femsehen Lichbündel zeilenweise in Richtung auf einen Schirm abgelenkt. Eine weitere Ablenkung senkrecht zu der Zeilenrasterung dient zum bildmäßigen Rastern.

Während des Rastems werden einzelne Bildpunkte auf dem Schirm beleuchtet, wobei die Intensitäten der Lichtbündel bezüglich der Farbe und Helligkeit der jeweils beleuchteten Bildpunkte gesteuert werden. Zur Farbdarstellung sind in der Quelle drei Laser unterschiedlicher Wellenlänge vorgesehen, deren Intensität in geeigneter Weise moduliert ist.

Die Zeilenablenkung ist dabei problematisch, da sie einer sehr hohen Frequenz bedarf. Solche Ablenkungen werden üblicherweise mit akustooptischen Modulatoren oder gemäß der DE 43 24 848 C1 mit Polygonspiegeln durchgeführt. Es ist aber zu erwarten, daß man bei einer zukünftigen Fernsehnorm hoher Auflösung, wie HDTV, schnell an die physikalischen Grenzen bezüglich der Ablenkfrequenzen stößt. Es bedarf daher weiterer Entwicklungen auf dem Gebiet der Polygonspiegel oder der akustooptischen Modulatoren.

Bei einer vertikalen Ablenkfrequenz (Bild- oder Halbbildfrequenz) von 50 Hz werden beispielsweise folgende Frequenzen für die Zeilenablenkung gefordert:

| | |
|---|---|
| PAL interlaced | 15.625 Hz |
| PAL non-interlaced | 31.250 Hz |
| HDTV interlaced | 31.250 Hz |
| HDTV non-interlaced | 62.500 Hz |

Mit hochentwickelten Polygonspiegelrädem werden horizontale Ablenkfrequenzen von etwa 32 kHz erreicht. Typische technische Daten dafür sind 1.250 Hz Drehfrequenz unter Verwendung von 25 Facetten. Derartige Polygonspiegel und andere mechanische Spiegelablenksysteme mit ähnlichen Parametern stellen praktisch schon ein Optimum bezüglich erreichbarer Dynamik, Ablenkwinkel, Durchmesser des Lichtbündels, Dispersionsunabhängigkeit, Geräusch, Baugröße, Medienversorgung und Kosten dar.

Die Beschränkungen in der Dynamik massebewegter mechanischer Ablenksysteme begrenzen jedoch die an sich hervorragende Eignung dieser Systeme für Anwendungen im Bereich der hochqualitativen Laserprojektionstechnik, insbesondere für ein Laserkino oder ein Planetarium.

Eine Verdopplung der Ablenkfrequenz z.B. durch die Verdopplung der Polygonfacetten ist durch die dann verringerte Länge der einzelnen Facetten bei gleichem Durchmesser nicht möglich. Eine Vergrößerung des Durchmessers erhöht dagegen die Anforderungen an den Polygonspiegel erheblich. Eine Verdopplung der Drehfrequenz stellt ferner sehr hohe Anforderungen an den Antrieb und die Lagerung des Polygonspiegels, insbesondere jedoch an seine Materialeigenschaften, da eine Verdopplung der Drehfrequenz eine Vervierfachung der Fliehkräfte bewirkt und übliche Materialien diesen Kräften ab einer bestimmten Grenze nicht standhalten und zum Zerreißen des Polygonspiegels führen können.

Aus diesen Gründen ist die Forderung nach der Erhöhung der Ablenkfrequenz mechanischer Ablenkeinrichtungen nicht ohne weiteres zu erfüllen. Möglicherweise können diese Schwierigkeiten jedoch durch neue Materialien und neue Technologien für schnelle, mechanisch arbeitende Lichtablenkeinrichtungen oder nichtmechanische, insbesondere elektrooptische und akustooptische Strahlablenkeinrichtungen gelöst werden.

Ein weiteres Problem ergibt sich aus der Forderung nach Lichtbündeln geringer Divergenz, damit eine geeignete Auflösung erreicht wird. Deswegen verwendet man gemäß dem momentan bekannten Stand der Technik üblicherweise Laser zur Erzeugung der Lichtbündel, für die das ausgehende Lichtbündel im wesentlichen parallel ist. Besonders bei Großbildprojektionen stößt man aber sehr schnell an die Grenze heute verfügbarer Laserleistungen. Man könnte diesbezüglich daran denken, ein primäres Lichtbündel über mehrere optische Verstärker zu führen, aus denen dann Lichtbündel höherer Ausgangsleistung gewonnen werden, die wiederum in einem einzigen Strahl zusammengefaßt werden. Dabei zeigt sich jedoch, daß aufgrund von Kohärenz und temperaturabhängiger Phasenlage der ausgehenden Lichtbündel im Femfeld trotzdem nur eine niedrige und instabile Lichtintensität verfügbar ist.

Zur Lösung beider Probleme wird in der DE 41 39 842 A1 vorgeschlagen, das Videobild in verschiedene Teilbilder zu unterteilen und diese getrennt mit jeweils einer Laserquelle und zugehörigen Ablenkeinrichtungen darzustellen.

Dieses System ist aufwendig und hat zudem noch einen weiteren Nachteil. Bei der einleitend genannten Vorrichtung ist nämlich die Bildqualität aufgrund der winkelproportionalen Ablenkung paralleler Lichtbündel unabhängig vom Abstand zwischen Projektionsschirm und Ablenkeinrichtung. Mit dem Abstand ändert sich ausschließlich die Bildgröße, wobei das Bild bei Änderung des Abstands jedoch niemals unscharf wird. Das erlaubt beispielsweise die Abbildung von Bildern auf beliebig gekrümmten Oberflächen, so daß auch Planetariums- oder Flugsimulationsanwendungen sowie sogar neue Showanwendungen mit derartigen Vorrichtungen möglich werden. Dies ist bei Videogeräten gemäß DE 41 39 842 A1 dagegen nicht möglich, denn bei Änderung des Abstands überlappen oder trennen sich die einzelnen Teilbilder.

Die gleichen Nachteile ergeben sich aus einem Vorschlag gemäß der US 4 796 961 für das Rastem mit Polygonspiegeln in der Drucktechnik. Dabei werden zwei Laserlichtbündel unterschiedlich polarisiert und mittels eines Polarisationsstrahlteilers so zusammengeführt, daß jeweils zwei Zeilen gleichzeitig mit demselben Polygonspiegel abgelenkt werden. Dies verringert zwar den Aufwand gegenüber der Aufteilung in Teilbilder gemäß der DE 41 39 842 A1. Jedoch würde die Zeilendichte bei Anwendung dieser Technik in einem Videogerät, da die Lichtbündel nach diesem Polarisationsstrahlteiler zum Zusammenfügen der polarisierten Lichtbündel parallel verlaufen, abhängig vom Abstand des Schirms zur Ablenkeinrichtung. Daher ist diese Rastertechnik zur Beseitigung der angesprochenen Problematik für ein Videogerät der eingangs genannten Art nicht verwendbar.

Bei einem Videogerät gemäß der WO 95/10159 wird allerdings eine ähnliche Technik eingesetzt. Die von einer Laserzeile ausgehenden Laserstrahlen werden dabei über eine Linse auf den ablenkenden Polygonspiegel geworfen und für verschiedene Zeilen gemeinsam abgelenkt. Dabei wird mit dem Polygonspiegel jedoch keine winkelproportionale Zeilenrasterung in verschiedenen Zeilen durchgeführt, sondern die gesamte Laserzeile über die nacheinander ablenkenden Facetten gemäß einer Tangensabhängigkeit verschoben. Es ist fraglich, ob ein derartiger Polygonspiegel überhaupt gefertigt werden kann, denn es bedarf eines sehr genauen Schliffs bezüglich des Tangens des Ablenkwinkels. Eine winkelproportionale Ablenkung bei diesem Verfahren würde ferner keine gleichmäßige Zeilendichte ergeben, so daß nur Bilder geringer Qualität erreichbar wären.

Weiter müssen die von dem Polygonspiegel reflektierten Laserstrahlen wieder in eine Bildpunktreihe umgewandelt werden, wozu es einer weiteren Linse bedarf. Zur Erzeugung der endgültigen Bildgröße wird dann noch eine weitere Projektionsoptik nachgeschaltet, die auf die Projektionswand fokussiert, so daß der oben genannte Vorteil der Bildvergrößerung bei Abstandsvergrößerung bzw. der Vorteil der Formunabhängigkeit der Projektionsfläche nicht gegeben sind.

Aufgabe der Erfindung ist es, ein eingangs genanntes Videogerät für eine erhöhte Lichtleistung zu verbessern, bei dem die mit diesem generierten Videobilder unabhängig von Abstand bzw. Form des Projektionsschirms von der Ablenkeinrichtung scharf abgebildet werden. Insbesondere soll die Erfindung auch bezüglich erhöhter Bildpunktdichte weitergebildet werden können, so daß beispielsweise auch hochaufgelöste Bilder (HDTVnon-interlaced) sogar beim Rastem im non-interlaced Verfahren darstellbar sind.

Die Aufgabe wird für eine Vorrichtung der eingangs genannten Art dadurch gelöst, daß die Quelle zwei unabhängig voneinander modulierbare Lichtbündel emittiert, von denen das erste mit der Videoinformation zum Beleuchten eines jeweils durch Rastem angesteuerten ersten Bildpunktes und das zweite mit der Vdeoinformation zum Beleuchten eines zweiten Bildpunktes moduliert sind, wobei die Videoinformation des zweiten Bildpunktes gegenüber der Videoinformation des ersten Bildpunktes um m_{z} Zeilen eines Bildes und mₚ Bildpunkte einer Zeile, mit ganzen Zahlen m_{z} ≤ N_{z} und mₚ ≤ Nₚ sowie m_{z} und/oder mₚ ≠ 0, versetzt ist, und daß ein optisches System vorgesehen ist, das die beiden Lichtbündel an einem gemeinsamen, in Lichtausbreitungsrichtung vor oder innerhalb der Ablenkeinrichtungen gelegenen reellen oder virtuellen Punkt zusammenführt, von dem aus die beiden Lichtbündel (39, 39') unter einem vorgegebenen Winkel m_{z} × α_{z}/N_{z} in Bildrasterrichtung sowie mₚ × αₚ/Nₚ in Zeilenrasterrichtung auseinanderlaufen.

Mit dieser Vorrichtung läßt sich auch das eingangs genannte Verfahren erfindungsgemäß ausgestalten, indem von der Quelle zwei Lichtbündel emittiert werden, von denen das erste mit der Videoinformation zum Beleuchten eines jeweils durch Rastern angesteuerten ersten Bildpunktes und das zweite mit der Videoinformation eines zweiten Bildpunktes moduliert werden, wobei die Videoinformation des zweiten Bildpunktes gegenüber der des ersten Bildpunktes um m_{z} Zeilen und mₚ Bildpunkte versetzt ist, mit ganzen Zahlen m_{z} ≤ N_{z} und mₚ ≤ Nₚ sowie m_{z} und/oder mₚ ≠ 0, und indem die beiden Lichtbündel mittels eines optischen Systems an einem gemeinsamen, in Lichtausbreitungsrichtung vor oder innerhalb der Ablenkeinrichtung gelegenen reellen oder virtuellen Punkt zusammengeführt werden, von dem aus die beiden Lichtbündel unter einem vorgegebenen Winkel der Größe m_{z} × α_{z}/N_{z} in Bildrasterrichtung sowie mₚ × αₚ/Nₚ in Zeilenrasterrichtung auseinanderlaufen.

Die Vorrichtung läßt sich erfindungsgemäß dadurch herstellen, daß die Quelle für das Emittieren zweier unabhängig voneinander modulierbarer Lichtbündel ausgebildet wird, von denen das erste mit der Videoinformation zum Beleuchten eines jeweils durch Rastern angesteuerten ersten Bildpunktes und das zweite mit der Videoinformation zum Beleuchten eines zweiten Bildpunktes moduliert werden, wobei die Videoinformation des zweiten Bildpunktes gegenüber der des ersten Bildpunktes um m_{z} Zeilen eines Bildes und mₚ Bildpunkte in einer Zeile versetzt ist, mit ganzen Zahlen m_{z} ≤ N_{z} und mₚ ≤ Nₚ sowie m_{z} und/oder mₚ ≠ 0, daß ein optisches System vorgesehen wird, das die beiden Lichtbündel an einem gemeinsamen in Lichtausbreitungsrichtung vor oder innerhalb der Ablenkeinrichtung gelegenen reellen oder virtuellen Punkt zusammenführt, von dem aus die beiden Lichtbündel unter einem vorgegebenen Winkel der Größe m_{z} × α_{z}/N_{z} in Bildrasterrichtung sowie mₚ × αₚ/Nₚ in Zeilenrasterrichtung auseinanderlaufen, und daß die Ablenkeinrichtung bezüglich der beiden Lichtbündel für das synchrone Rastem der beiden Lichtbündel über diejenigen Bildpunkte, für welche die Lichtbündel jeweils intensitätsmoduliert sind, angeordnet wird.

Ähnlich wie bei der US 4 796 961 erhält man also den Vorteil, daß mehrere Zeilen durch ein und dieselbe Ablenkeinrichtung, wie beispielsweise einen Polygonspiegel, gerastert werden. so daß die Leistung bezüglich der Anzahl der verwendeten Lichtbündel erhöht wird und weiter sogar die Rotationsfrequenz des Polygonspiegels herabgesetzt werden kann, wenn beispielsweise zusätzlich auch vorgesehen wird, daß die beiden Lichtbündel unterschiedliche Zeilen in einem Bild rastem. Die Erfindung unterscheidet sich aber von dieser Technik wesentlich durch das vorgesehene optische System. Während bei der US 4 796 961 die beiden Lichtbündel parallel aus dem optischen System herausgeführt werden, werden sie erfindungsgemäß so zusammengeführt, daß sie einen gemeinsamen Punkt reell oder virtuell durchlaufen und von diesem aus unter einem definierten Winkel ausfallen, der allein durch die Winkelablenkung des bildmäßigen Rastems der Ablenkeinrichtung gekennzeichnet ist. Dies steht im Gegensatz zur Lehre der WO 95 10159, gemäß der die Winkel von Lichtbündeln einzelner Zeilen aufgrund des Abstands der Relaislinse zum Polygonspiegel völlig unabhängig von irgendeiner winkelproportionalen Ablenkung festgelegt sind, die bei dieser Technik auch gar nicht vorgenommen wird. Die Erfindung geht jedoch noch weiter als der angegebene Stand der Technik. Sie gestattet nämlich zusätzlich zum simultanen Rastem von Zeilen auch das gleichzeitige Rastem verschiedener Bildpunkte, was sich vor allem für die Erhöhung der Bildpunkthelligkeit vorteilhaft auswirkt.

Die Lage des erfindungsgemäß vorgegebenen Punktes, an dem die beiden Lichtbündel zusammengeführt werden, nämlich vor oder innerhalb der Ablenkeinrichtung, ermöglicht die vorher beschriebene Änderung des Abstands zwischen Ablenkeinrichtung und Bildschirm in besonders günstiger Weise, wie aufgrund folgender Vorstellung sogleich einsichtig ist. Läge dieser Punkt nämlich beispielsweise in der Mitte zwischen der Projektionswand und der Ablenkeinrichtung, ließe sich dann nach Verschieben der Projektionswand in die Nähe der Ablenkeinrichtung kein scharfes Bild mehr erzielen. Aufgrund der erfindungsgemäßen Lage des vorgegebenen Punktes kann der Bildschirm dagegen ohne Qualitätsverlust auch besonders nah an die Ablenkeinrichtung herangeführt werden.

Eine bevorzugte Weiterbildung der Erfindung, die vor allen Dingen auch eine hohe Ablenkgeschwindigkeit begünstigt, sieht einen Bildspeicher vor, aus dem die jeweiligen Zeilen für das erste und das zweite Lichtbündel synchron auslesbar sind, und eine Steuereinrichtung zum Steuern der Quellen und/oder der Ablenkeinrichtung, um jede Zeile des Videobildes jeweils ausschließlich durch eines der beiden Lichtbündel zu rastern.

Aufgrund dessen werden unterschiedliche Zeilen eines Videobildes immer nur einmal gerastert. Dadurch wird eine erhöhte Zeilenzahl möglich, ohne daß die Geschwindigkeit der Ablenkeinrichtung, insbesondere die des schon genannten Polygonspiegels, erhöht werden müßte. Bei der Projektion eines TV-Bildes nach der HDTV-Norm wird beispielsweise im interlaced-Verfahren bei 50 Hz Halbbildfrequenz je ein Halbbild mit 625 Zeilen erzeugt. Bekanntermaßen ist aber bei dem sogenannten non-interlaced-Verfahren die Bildqualität wegen der 50 Hz-Vollbilddarstellung wesentlich verbessert. Dies ist dadurch begründet, daß die Horizontalzeilen, die zu je einem Halbbild gehören, nur mit 25 Hz Bildwiederholfrequenz dargestellt werden, obwohl das gesamte Bild aus größerem Abstand betrachtet mit einer Halbbildwechselfrequenz von 50 Hz erscheint.

Die durch Verdopplung der Ablenkgeschwindigkeit mögliche Bildwechselfrequenz von 50 Hz läßt das gesamte Bild dagegen nahezu flimmerfrei erscheinen. Beim non-interlaced-Verfahren wird allerdings eine doppelte Zeilenfrequenz benötigt, die aufgrund der Weiterbildung der Erfindung ohne größere technische Schwierigkeiten möglich ist, da hier zwei Zeilen gleichzeitig geschrieben werden.

Der Übergang vom interlaced-Verfahren zum non-interlaced-Verfahren ist also bei hochauflösenden Normen ohne weiteres gegeben, ohne daß die Zeilenfrequenz des beispielhaft genannten Polygonspiegels erhöht werden muß.

Eine weitere Möglichkeit besteht in einer reinen Zeilenverdopplung mit gleicher Videoinformation zur Erhöhung des Bildinhalts. Weiter besteht die Möglichkeit einer Bilddarstellung mit der Methode der Auflösungserhöhung, wie sie beispielsweise in der DE 195 17 357 C1 eingehend dargestellt ist. Insbesondere dafür kann ein Rastem zweier unterschiedlicher Bildpunkte in der gleichen Zeile (m_{z} = 0) vorteilhaft sein, bei der das erste Lichtbündel dann beispielsweise die erste Hälfte der Zeile schreibt und das zweite Lichtbündel gleichzeitig die zweite Hälfte schreibt. Dadurch können gegenüber dem Stand der Technik doppelt so viele Bildpunkte in der halben Rasterzeit für eine Zeile geschrieben werden.

Ferner ist auch eine Bilddarstellung bei 62,5 kHz interlaced-Betrieb mit einem Polygonspiegel und 31,25 kHz Rasterfrequenz möglich, wenn gleichzeitig vier Lichtbündel mit der Bildinformation jeweils einer Zeile intensitäts- und farbmoduliert und mit der gemäß der Erfindung vorgesehenen Ablenkeinrichtung gleichzeitig zur Abbildung gebracht werden. Durch diese Lösung kann weiter die Helligkeit des projizierten Bildes wesentlich erhöht werden. Durch das Übereinanderlegen von mit verschiedenen Lichtbündeln geschriebenen Zeilen ist es nicht mehr erforderlich, die Lichtbündel räumlich zu vereinigen, was - wie vorhergehend dargestellt - bisher Schwierigkeiten für die Erhöhung und Stabilität der Leistungsdichte im Femfeld nach sich zog.

Die erfindungsgemäße Zahl mz zwischen der Zeilenzahl des ersten Lichtbündels und der des zweiten Lichtbündels kann prinzipiell frei bis zur maximalen Zeilenzahl N_{z} gewählt werden. Beispielsweise ist es möglich, mit dem ersten Lichtbündel die erste, zweite, dritte usw. Zeile zu rastem, während mit dem zweiten Lichtbündel die 313., 314., 315. usw. Zeile gerastert werden, also bei einem 625-Zeilen-Bild die obere Hälfte von einem Lichtbündel und die untere Hälfte von dem anderen Lichtbündel erzeugt sind. Dies war beispielsweise bei dem durch die US 4 796 961 gegebenen Stand der Technik nicht möglich, da gemäß deren Lehre die Auftreffpunkte auf dem Polygonspiegel bei dieser Betriebsart sehr weit voneinander beabstandet wären, was unkontrollierte Ablenkungen aufgrund unterschiedlicher Pyramidalfehler für die beiden Lichtbündel in verschiedenen Zeilen aufgrund einer eventuellen Krümmung der Spiegelfacetten des Polygonspiegels zur Folge hätte.

Erfindungsgemäß ist diese Darstellungsart aber möglich, wenn beispielsweise der gemeinsame Punkt, von dem die Lichtbündel ausgehen, in der Nähe der Facetten-Oberfläche oder sogar auf der Facetten-Oberfläche des Polygonspiegels aufgrund der Auslegung des optischen Systems zu liegen kommt, da dann immer derselbe Teil des Polygonspiegels beide Lichtbündel abbildet.

Abgesehen von den nahezu frei wählbaren Zahlen m_{z} und mₚ könnte bei einer ungünstigen Wahl von diesen die vorher genannte Steuereinrichtung allerdings sehr aufwendig werden, wenn beispielsweise sichergestellt werden soll, daß jeder Bildpunkt des Videobildes nur durch jeweils eines der Lichtbündel gerastert wird.

Bei einer vorzugsweisen Weiterbildung der Erfindung ist deshalb vorgesehen, daß das erste Lichtbündel entweder nur über ungerade oder nur über gerade Zeilenzahlen geführt ist und die Zahl m_{z} ungerade ist.

Dadurch erniedrigt sich der Steueraufwand wesentlich, da das erste Lichtbündel dann beispielsweise über die Zeilen 1, 3, 5... geführt wird, während das zweite Lichtbündel, beispielsweise bei m_{z} = 3, gleichzeitig mit diesem über die Zeilen 4, 6, 8... geführt wird. Dadurch wird automatisch verhindert, daß beide Lichtbündel jemals dieselbe Zeile beschreiben können. Aufgrund dessen wird vermieden, daß einzelne Bildpunkte durch Mehrfachbeleuchtung in einer höheren Intensität, bei zwei Lichtbündeln dann der doppelten Intensität, erscheinen.

Der elektronische Aufwand wird dadurch gegenüber anderen Lösungen, bei denen das Auslesen verschiedener Zeilen gegenseitig verriegelt werden müßte, damit einige Zeilen während eines Bildzyklus nicht von beiden Lichtbündeln geschrieben werden, drastisch verringert.

Sollen die Lichtbündel dagegen dieselben Bildpunkte schreiben, so ist gemäß einer bevorzugten Weiterbildung vorgesehen, daß das erste Lichtbündel zum Rastern eines vollständigen Bildes über fortlaufende Zeilenzahlen geführt wird. Dann schreibt auch das zweite Lichtbündel unabhängig von den Zahlen m_{z} und mₚ das gesamte Bild. Die Bildpunktintensität pro Zeit ist daher bei zwei Lichtbündeln in jedem Videobild verdoppelt.

Bei einer anderen vorzugsweisen Weiterbildung der Erfindung ist vorgesehen, daß die Ablenkeinrichtung einen Polygonspiegel für das Rastern von Nₚ Bildpunkten in Zeilenrichtung aufweist und der gemeinsame Punkt der Lichtbündel auf der jeweiligen ablenkenden Facette des Polygonspiegels liegt. Damit werden beide Lichtbündel von demselben Punkt des Polygonspiegels abgelenkt, unterschiedliche Pyramidalfehler für die Zeilen beider Lichtbündel, aufgrund einer eventuellen kleinen Krümmung der Polygonspiegelfacette, werden auf diese Weise vermieden, so daß es bei Fehlablenkung nur einer einzigen Pyramidalfehlerkorrektur bedarf.

Bei einer anderen vorteilhaften Weiterbildung der Erfindung weist die Ablenkeinrichtung einen Schwenkspiegel zum bildmäßigen Rastern von N_{z} Zeilen des Videobildes auf, und der gemeinsame Punkt liegt auf der Oberfläche des Schwenkspiegels.

Mit dem Schwenkspiegel wird das durch den Zeilenspiegel, beispielsweise den Polygonspiegel, zeilenmäßig abgelenkte Lichtbündel femer in verschiedene Zeilenrichtungen abgelenkt. Wenn der gemeinsame Punkt auf der Oberfläche des Schwenkspiegels liegt, sind daher die gleichen optischen Bedingungen für die erfindungsgemäß gleichzeitig gerasterten Zeilen wie beispielsweise bei der Vorrichtung gemäß der DE 43 24 848 C1 gegeben. Damit läßt sich die Forderung, unabhängig von der Position des Projektionsschirms relativ zur Ablenkeinrichtung dieselbe Zeilendichte zu erreichen, besonders gut erfüllen. Dies ist zwar auch bei anderen Lagen des Ausgangspunkts der beiden Lichtbündel gegeben, wenn die Projektionswand sehr weit von der Ablenkeinrichtung entfernt ist, jedoch lassen sich hier vorteilhaft auch sehr kleine Bilder mit der Projektionswand in der Nähe der Ablenkeinrichtung, beispielsweise wenn sehr kompakte Videogeräte kleiner Bildgröße gefordert sind, verwirklichen.

Bei einer anderen bevorzugten Weiterbildung der Erfindung ist für jedes der Lichtbündel ein Lichtleiter vorgesehen, in den es von der Quelle aus eingeleitet ist. Die ausgangsseitigen Enden der Lichtleiter sind unter einem Abstand befestigt und ausgangsseitig ist nachfolgend eine fokusslerende Einrichtung vorgesehen, in deren eingangsseitiger Brennebene die Ausgänge der Lichtleitfasem liegen, wodurch das Licht aus dem jeweiligen Lichtleiter einerseits parallelisiert ist und andererseits die beiden Lichtbündel unter Bildung der vorgegebenen Winkel αₚ und α_{z} in einem Punkt zusammengeführt sind.

Aufgrund dieser Weiterbildung läßt sich das erfindungsgemäß vorgesehene optische System besonders einfach verwirklichen, wie vor allen Dingen auch nachfolgend anhand von Ausführungsbeispielen gezeigt wird. Aufgrund der Lichtleiter ergibt sich einmal ein kostengünstiges optisches System zum Zusammenführen der gemeinsam in verschiedenen Zeilen abzulenkenden Lichtbündel. Weiter sinkt der notwendige Justieraufwand für die Quelle gegenüber anderen optischen Systemen, da die Lichtleiter in einem definierten Abstand zusammengeführt sind, also diesbezüglich ein Justieren der Quelle für Ort und Winkel entfällt. Außerdem läßt sich mit Hilfe dieser fokussierenden Einrichtung sowohl das aus dem Lichtleiter ausfallende Licht in einfacher Weise parallelisieren und der Winkel in Abhängigkeit des Abstands der Lichtleiter von der ersten Hauptebene der fokussierenden Einrichtung definiert einstellen. Im einfachsten Fall ist die fokussierende Einrichtung eine Linse mit positiver Brechkraft, was zeigt, wie gering der Aufwand für das optische System gemäß dieser Weiterbildung gehalten werden kann.

Bei einer anderen vorzugsweisen Weiterbildung ist mindestens ein Lichtleiter ausgangsseitig unter einem Winkel zur optischen Achse angeordnet ist, der betragsmäßig kleiner als 30° und insbesondere kleiner als 1° ist. Durch den zusätzlichen Freiheitsgrad der Winkeleinstellung des Lichtleiters und damit des Lichtbündels ist der Ort des gemeinsamen Punktes in weiteren Bereichen wählbar als bei einer parallelen Anordnung der beiden Lichtleiter. Damit läßt sich die Vorrichtung einfach optimieren. Die angegebenen Obergrenzen für die Winkel haben sich in praktischen Versuchen als besonders geeignet erwiesen.

Der Aufwand sinkt gemäß einer bevorzugten Weiterbildung der Erfindung weiter, wenn die Lichtleiter in einem integriert-optischen Bauelement vorsehen werden, da integriert-optische Bauelemente kostengünstig mit geringen Fertigungstoleranzen herstellbar sind. Außerdem kann der geforderte Abstand zwischen den Ausgängen der Lichtleiter durch die Integration aufgrund der so möglichen geringen Fertigungstoleranzen besonders gut definiert festgelegt werden.

Besonders günstig hat es sich für das Rastem sehr nahe beieinanderliegender Zeilen eines Videobildes herausgestellt, wenn der Abstand der Ausgänge der Lichtleiter gemäß einer vorteilhaften Weiterbildung der Erfindung größer als 10 µm, insbesondere größer als 30 µm, und kleiner als 1 mm ist, denn damit können einerseits (größer als 10 µm) in einfacher Weise zwei sehr naheliegende Zeilen für das erste und das zweite Lichtbündel gemeinsam geschrieben werden, ohne daß, beispielsweise über Leckfeldkopplung, die Lichtinformation von einem Lichtleiter auf den anderen übergehen kann, andererseits (kleiner als 1 mm) kann der Punkt zum Zusammenführen, wie vorstehend schon erläutert, im wesentlichen unabhängig von der Lage der ablenkenden Polygonspiegelfacetten gewählt werden.

Eine andere vorteilhafte Möglichkeit ergibt sich gemäß einer bevorzugten Weiterbildung der Erfindung, bei der die Lichtleiter Kern und Mantel aufweisende Lichtleitfasern sind, die ausgangsseitig zusammengefügt sind, wobei die Mäntel an der Stelle zum Zusammenfügen abgeflacht sind, so daß die Kerne der beiden Lichtleitfasern ausgangsseitig einen geringen Abstand von größer als 10 µm aufweisen. Es ergeben sich so die gleichen Vorteile wie oben, jedoch werden hier flexible Lichtleitfasern als Lichtleiter eingesetzt, was den weiteren Vorteil hat, daß die Ausgänge der Lichtleitfasem zwar mechanisch starr unter dem verlangten Abstand miteinander verbunden sind, die Eingänge der Lichtleiter jedoch aufgrund deren Flexibilität zu nahezu beliebigen Orten verlegbar sind. Dies bedeutet, man kann aufgrund dieser Weiterbildung ein besonders kostengünstiges kompaktes Videogerät verwirklichen, weil der Ort und die Ausrichtung der Lichterzeuger frei wählbar wenden.

Vorstehend wurde schon der Nachteil der Leckfeldkopplung zwischen Lichtleitem angesprochen. Ein Lichtbündel wird nämlich aufgrund dieser Kopplung nicht nur im Lichtleiter geführt, denn ein Teil des elektrischen Feldes fällt auch aufgrund der von Null verschiedenen Wellenlänge senkrecht zur Ausbreitungsrichtung aus dem Lichtleiter aus. Bei sehr nahe aneinanderliegenden Lichtleitem kann dieses "Leckfeld" im anderen Lichtleiter eine Mode anregen. Dies läßt sich, wie vorhergehend schon angedeutet, durch entsprechend großen Abstand zwischen den Zentren der lichtführenden Teile der Lichtleiter vermeiden.

Man kann jedoch auch daran denken, den Abstand geringer zu halten, indem eine spiegelnde Fläche an den Kontaktflächen der Lichtleitfasern vorgesehen wird. Aufgrund der Spiegelung werden die Leckfelder reflektiert, so daß diese den anderen Lichtleiter nicht beeinflussen können. Allerdings entsteht dadurch erfahrungsgemäß eine Dämpfung, die dann durch eine konische Verbreiterung des Kerns, einen Taper ausgeglichen werden muß, der bei ungünstigen Verhältnissen keinen geringen Abstand zum Erzeugen kleiner Winkel αₚ und α_{z} mehr gestattet.

Bei einer anderen vorteilhaften Weiterbildung ist vorgesehen, daß die Ablenkeinrichtung einen in zwei Richtungen beweglichen Spiegel aufweist, auf dessen Oberfläche beide Lichtbündel in dem gemeinsamen Punkt unter dem vorgegebenen Winkel zusammenlaufen, von dem aus dann die Lichtbündel reflektiert werden, und daß ein Antrieb für eine spiralförmige Bewegung des beweglichen Spiegels vorgesehen ist, wobei die Zeilen für die Größe m_{z} radial und die Bildpunkte für die Größe mₚ in Fortschreitrichtung der so gerasterten Spirale gezählt sind.

Eine spiralige Rasterweise hat Vorteile bei Projektionen, die in Polarkoordinaten durchgeführt werden. Das ist beispielsweise bei Flugsimulatoren oder Planetarien günstig, da hier üblicherweise der Bildinhalt auf einer Kugel- oder Teilkugelfläche dargestellt werden soll. Spiralige Rastertechniken sind beispielsweise aus der US 3,569,616 bekannt.

Die zur Projektion auf einer planen Fläche ganz andersgeartete Geometrie läßt den Einsatz der Erfindung bei derartigen Rastertechniken mit spiraliger Ablenkung zunächst unwahrscheinlich erscheinen. Bei der angegebenen geeigneten Wahl der Zeilen- und Bildpunktkoordinaten bezüglich Radius und Umfang läßt sich die Erfindung jedoch unerwarteterweise ebenfalls einsetzen, woraus sich auch für diese Rasterweise die oben angegebenen Vorteile verwirklichen lasen. Dieses Beispiel zeigt auch, daß der Begriff der Zeile und des Bildpunktes wesentlich allgemeiner verstanden werden muß, als man von der bekannten Rastertechnik beim Fernsehen erwarten würde.

Die vorstehenden Erörterungen beziehen sich nur auf zwei Bildpunkte und zwei Lichtbündel. Vorteilhaft können aber auch mehr als zwei Lichtbündel für jeweils zugeordnete Zeilen eingesetzt werden, wobei die vorhergehend genannte Zahl zwei eine Teilmenge dieser mehreren Zeilen bzw. Bildpunkte sowie der Lichtbündel ist.

Insbesondere für mehr als zwei Lichtbündel ist gemäß einer vorteilhaften Weiterbildung der Erfindung vorgesehen, daß die Quelle vier unabhängig voneinander modulierbare Lichtbündel emittiert, von denen zwei Lichtbündel verschiedene Bildpunkte unter einem Winkel αₚ einer ersten Zeile eines Bildes schreiben und die zwei anderen Lichtbündel verschiedene Bildpunkte unter einem Winkel αₚ in einer zweiten Zeile, die gegenüber der ersten Zeile um m_{z} Zeilen versetzt ist, schreiben. Damit lassen sich sowohl die Vorteile des simultanen Schreibens verschiedener Bildpunkte in einer Zeile als auch verschiedener Zeilen mit einer einzigen Vorrichtung realisieren. Insbesondere wird dafür eine Weiterbildung bevorzugt, bei der die Quellpunkte der Lichtbündel in Lichtrichtung gesehen auf einer Brennebene einer optischen Einrichtung im Rechteck angeordnet sind. Die dadurch gegebene, in zwei Richtungen symmetrische Anordnung ist vor allen Dingen bezüglich der Genauigkeit der Bildprojektion vorteilhaft, da aufgrund dieser Weiterbildung bei Abbildung der beiden Bildpunkte unter dem Winkel αₚ in einer Zeile auch gleich die gewünschte Bildpunktlage in der simultan gerasterten, um m_{z} versetzten Zeile sichergestellt ist.

Die Erfindung wird nachfolgend anhand der beigefügten Zeichnung im Prinzip noch näher beschrieben. Es zeigen:
- Fig. 1: eine schematische Darstellung für eine erfindungsgemäße Vorrichtung zur Darstellung von Videobildem;
- Fig. 2: ein Beispiel für das Rastem von Videobildern in Kartesischen Koordinaten;
- Fig. 3: ein Beispiel für das Rastem von Bildern in ebenen Polarkoordinaten;
- Fig. 4: eine schematische Darstellung für ein optisches System zum Einsatz bei der Vorrichtung von Fig. 1;
- Figuren 5 bis 8: andere optische Systeme als das in Fig. 4 zum Einsatz bei der Vorrichtung von Fig. 1;
- Fig. 9: eine perspektivische Ansicht eines integrierten Wellenleiterkopplers zum Zusammenführen von Lichtbündeln unterschiedlicher Wellenlängen;
- Fig. 10: ein optisches System zum Einsatz bei der Vorrichtung von Fig. 1 mit zwei Wellenleiterkopplem gemäß Fig. 8;
- Fig. 11: eine Schaltung zum Steuern der Vorrichtung von Fig. 1;
- Fig. 12: mehrere Signalverläufe zur Erläuterung der Schaltung von Fig. 11.

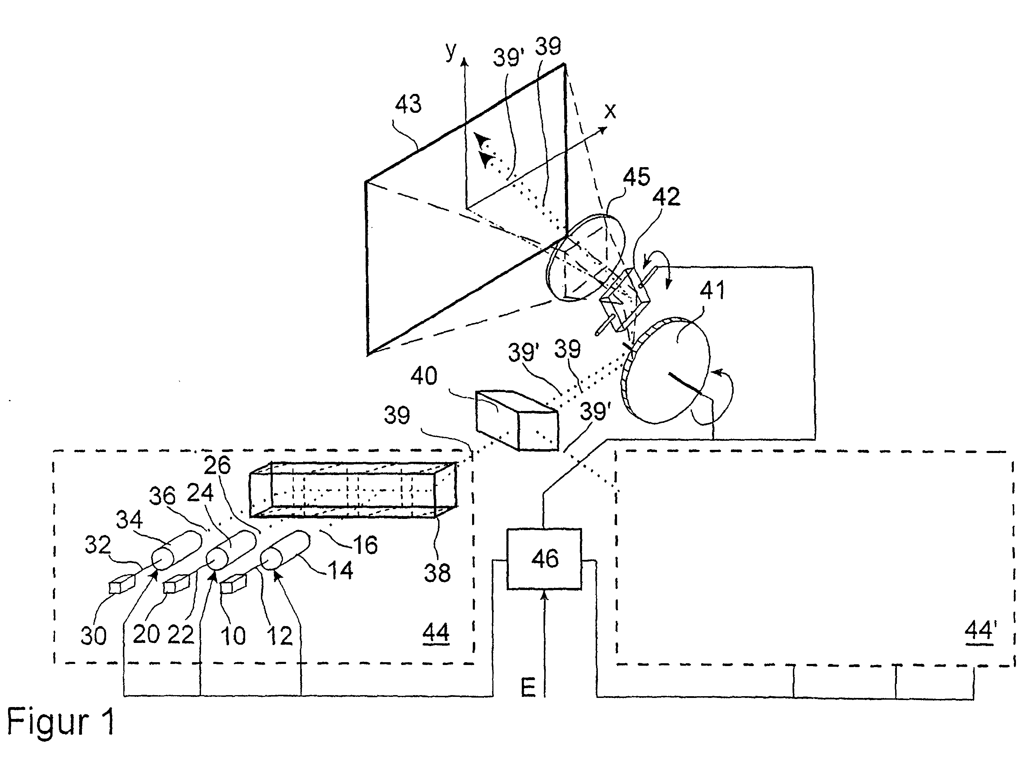

In Fig. 1 ist eine Laserprojektionseinrichtung gezeigt, wie sie beispielsweise zur Darstellung von Farbvideobildem in Laserkinos, Planetarien, Flugsimulatoren oder auch im Heimbereich eingesetzt werden kann. Das Projektionsgerät gemäß Fig. 1 ist insbesondere auf eine farbige Bilddarstellung ausgerichtet. Für die Mischung von drei Grundfarben sind drei Laser 10, 20, 30, von denen drei Lichtbündel 12, 22, 32 ausgehen, vorgesehen, die Licht geeigneter Wellenlänge zum Erzeugen von Bildpunkten eines Videobildes emittieren. Für monochrome Bilder ist dagegen nur ein einziger Laser notwendig. Jedoch beziehen sich die folgenden Ausführungen beispielhaft ausschließlich auf Farbbilder. Modifikationen für monochrome Geräte sind durch Reduzierung auf einen einfarbigen Laser ohne weiteres möglich.

Die Laser 10, 20, 30 wurden statisch betrieben. Zur Ansteuerung der Laser bezüglich Bildpunktfarbe und Helligkeit werden die drei Lichtbündel 12, 22, 32 deshalb mit gesonderten Modulatoren 14, 24, 34 moduliert. Derartige Modulatoren können entfallen, wenn die Laser 10, 20, 30 beispielsweise Laserdioden sind, die direkt über deren Stromversorgung angesteuert und über diese modulierbar sind.

Mit den Modulatoren 14, 24, 34 wird die Helligkeit und die Farbe der einzelnen Bildpunkte in vergleichbarer Weise zur Ansteuerung von Elektronenkanonen bei der bekannten Fernsehtechnik mit Farbbildröhren gesteuert.

Die Lichtbündel 12, 22, 32 werden nach Verlassen der Modulatoren 14, 24, 34 mittels einer Strahlzusammenführeinrichtung 38, die im Ausführungsbeispiel ein Spiegelsystem aus dichroitischen Spiegeln war, zu einem Gesamtlichtbündel 39 vereinigt. Dieser Teil der Vorrichtung stellt eine intensitäts- und farbmodulierte Lichtquelle 44 dar.

Das Gesamtlichtbündel 39 fällt in ein optisches System 40 ein, dem zusätzlich noch ein in gleicher Weise über eine eigene farb- und intensitätsmodulierbare Lichtquelle 44' erzeugtes Lichtbündel 39' zugeführt ist

Das Lichtbündel 39 ist zum Schreiben einer Zeile vorgesehen, während das Lichtbündel 39' zum synchronen Schreiben einer zur vom Lichtbündel 39 beschriebenen Zeile um m_{z} Zeilen versetzten Zeile eingesetzt ist. Weiter können auch die Bildpunkte, hier um eine Zahl mₚ, in den verschiedenen Zeilen gegeneinander versetzt sein. Die folgenden Beispiele sind aber im wesentlichen auf mₚ = 0, wenn nichts anderes gesagt ist, beschränkt, da allein schon mit simultanem Rastern unterschiedlicher Zeiten die wesentlichen Züge der Erfindung verdeutlicht werden können.

m_{z} kann wegen der später noch eingehend beschriebenen Funktion als Zeilenabstandszahl bezeichnet werden.

Für das synchrone Ablenken zweier Lichtbündel 39 und 39' in verschiedenen Zeilen weist die in Fig. 1 gezeigte Vorrichtung ein optisches System 40 auf, das die beiden Lichtbündel 39 und 39' unter einem Winkel, zusammen- oder auseinanderführt, so daß diese bei der nachfolgenden Bildprojektion als von einem reellen oder virtuellen gemeinsamen Punkt ausgehend erscheinen.

Die Lichtbündel 39 und 39' liegen bei mₚ = 0 in einer zur Zeilenablenkung senkrechten Ebene. Der durch das optische System eingestellte Winkel ist dabei für einen festen Zeilenabstand für m_{z} Zeilen, mit m_{z} einer ganzen Zahl kleiner als die Zahl N_{z} der effektiven Zeilen des Videobildes, bestimmt, wie nachfolgend noch eingehender erläutert wird.

Zum besseren Verständnis des bei dieser Vorrichtung verwendeten Ablenkprinzips sei auf die von der bekannten Femsehtechnik mit Bildröhren eingesetzte Rastertechnik hingewiesen. Die hier verwendete Technik unterscheidet sich davon dadurch, daß Lichtbündel 39, 39' statt Elektronenstrahlen zur Generierung von Bildpunkten des Videobilds eingesetzt werden und die bei Bildröhren übliche magnetische Ablenkung durch mechanisches Rastem mittels Zeilenspiegel 41, im Ausführungsbeispiel ein Polygonspiegel, und Bildspiegel 42, im Ausführungsbeispiel ein Schwenkspiegel, ersetzt ist. Das Rastern ist bei derartigen Laser- und Videoprojektionsgeräten allerdings nicht auf die dargestellten mechanischen Hilfsmittel beschränkt. Es kann beispielsweise auch akusto-optisch durchgeführt werden.

Weiter ist in der Fig. 1 eine Aufweitungsoptik 45 dargestellt, die im Ausführungsbeispiel dazu dient, bei kleinem Ablenkwinkel das Videobild zu vergrößern. Die Aufweitungsoptlk 45 ist dafür als gemäß der Tangensbedingung korrigiertes afokales Linsensystem ausgeführt. Da die Aufweitungsoptik 45 den Ablenkwinkel des Bündels auf dem Schirm mitbestimmt, ist sie der Ablenkeinrichtung zuzurechnen. In bezug auf die Erfindung sind aber alle Werte, beispielsweise für die Winkel αₚ und α_{z} und Teile von diesen, vor dieser Optik angeben.

Die beiden Lichtbündel 39 und 39' werden im Ausführungsbeispiel mittels einer aus einem Zeilenspiegel 41 und einem Bildspiegel 42 bestehenden Ablenkeinrichtung zeilen- und bildmäßig auf einen Bildschirm 43 abgelenkt, um dort einzelne Bildpunkte des zu erzeugenden Videobildes sequentiell zu beleuchten. Dieser Bildschirm 43 kann für die Darstellung von üblichen Fernsehbildern eben sein, wie es auch in Fig. 1 gezeigt ist. Bei Planetarien und Flugsimulatoren wird man ihn allerdings vorzugsweise gekrümmt ausbilden.

Der Bildschirm 43 kann allgemein auch als ein Front- oder Rückprojektionsschirm ausgebildet sein, je nachdem, ob sich die Beobachter des Bildes bestimmungsgemäß bezüglich des Bildschirms 43 auf der Seite der Optik 45 oder dieser gegenüberliegend aufhalten.

Bestandteil der Vorrichtung zur Darstellung von Videobildem ist eine speziell angepaßte elektronische Ansteuereinheit 46 für die Modulatoren 14, 24, 34, 14', 24' und 34'.

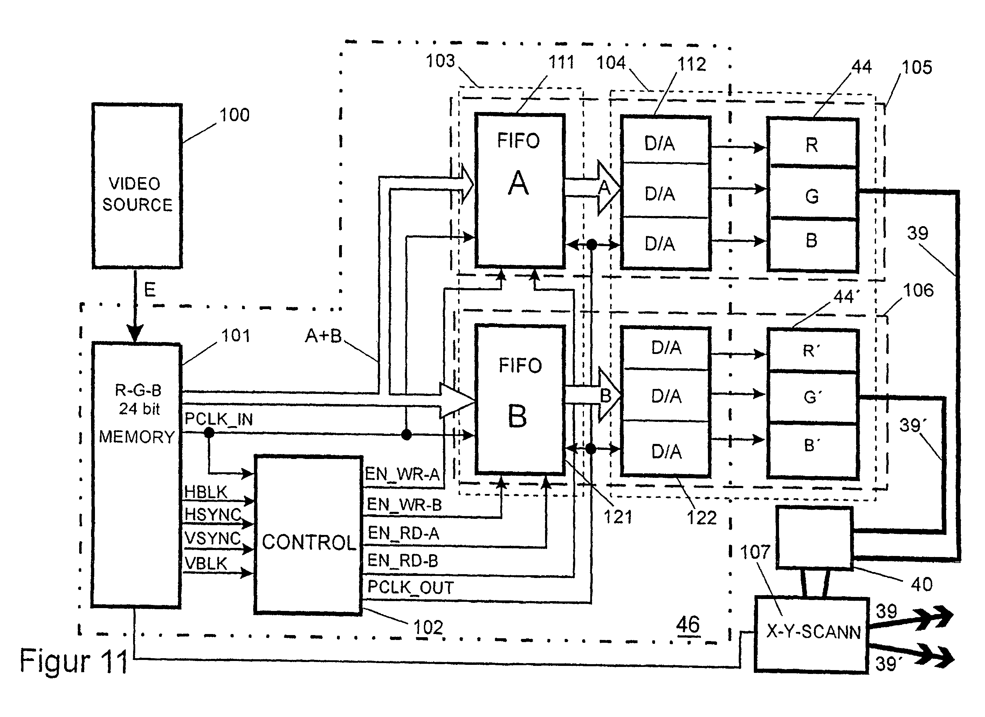

Die in der Ansteuereinheit 46 zwischengespeicherte Vdeoinformation wird synchron zur jeweiligen Stellung des Zeilenspiegels 41 (Polygonspiegelrad) und des Bildspiegels 42 (Galvanometerspiegel) ausgelesen und dann zur Intensitäts- und Farbmodulation der Lichtbündel 39 und 39' eingesetzt, wie später anhand der Steuerung von Fig. 11 noch näher verdeutlicht wird.

Zunächst sollen grundsätzliche Angaben zu wichtigen Femsehnormen mit Bezug auf die vorliegende Erfindung gemacht werden:

| **PAL non-interlaced (Vollbild)** | |
|---|---|
| Ein gerastertes Bild hat effektive Zeilen (N_{z}) | 575 |
| absolute Zeilen | 625 |
| Voll-Bildfrequenz | 50 Hz |
| Zeit für das Rastem einer Zeile | 32 µs |
| Winkel β_{z} zwischen zwei Zeilen im Bild bei Ablenkwinkel des Bildspiegels α_{z} = 15° | 0,026° |
| Zeilenabstand bei 6 m entfernter Bildwand (ohne Projektionsoptik 45) | 2,7 mm |
| Bildhöhe bei 6 m Abstand | 1,6 m |
| Totzeilen | 49 |
| Totzeit | 1,6 ms |
| | |
| Eine gerasterte Zeile hat dabei eine effektive Bildpunktanzahl (Nₚ) von | 720 |
| Ein Bildseitenverhältnis von 4:3 ergibt einen Ablenkwinkel des Zeilenspiegels 41 | 20° |
| Winkel βₚ zwischen zwei Bildpunkten in einer Zeile bei einem Winkel des Zeilenspiegels αₚ = 20° | 0,0277° |
| Bildpunktabstand bei 6 m entfemtem Bildschirm (ohne Projektionsoptik) | 2,9 mm |
| Bildbreite bei 6 m Abstand | 2,1 m |
| Zeit für das Rastern einer Zeile | 32 µs |
| Totzeit | 3,2 µs |
| | |

| **HDTV interlaced (Halbbildverfahren)** | |
|---|---|
| Ein gerastertes Bild (Halbbild) hat effektive Zeilen (N_{z}) | 575 |
| absolute Zeilen | 625 |
| ein Vollbild hat effektive Zeilen | 1152 |
| absolute Zeilen | 1250 |
| Voll-Bildfrequenz | 25 Hz |
| Halbbildfrequenz | 50 Hz |
| Winkel β_{z} zwischen zwei Zeilen im Bild bei Winkel des Bildspiegels α_{z} = 15° | 0,026° |
| Zeilenabstand bei 6 m entfemtem Bildschirm ohne Projektionsoptik | 2,7 mm |
| Bildhöhe bei 6 m Abstand | 1,6 m |
| Totzeilen | 49 |
| Totzeit | 1,6 ms |
| | |
| Eine gerasterte Zeile hat dabei eine effektive | |
| Bildpunktanzahl (Nₚ) von | 1440 |
| Ein Seitenverhältnis 16:9 ergibt einen Ablenkwinkel des Zeilenspiegels von | 26,77° |
| Winkel βₚ zwischen zwei Bildpunkten in einer Zeile bei einem Winkel des Zeilenspiegels αₚ = 26,7° | 0,0185° |
| Bildpunktabstand bei 6 m entferntem Bildschirm (ohne Projektionsoptik) | 2 mm |
| Bildbreite bei 6 m Abstand | 2,8 m |
| Zeit für das Rastem einer Zeile | 32µs |
| Totzeit | 3,2 µs |
| | |

| **HDTV non-interlaced (Vollbild)** | |
|---|---|
| Ein gerastertes Bild hat effektive Zeilen (N_{z}) | 1152 |
| absolute Zeilen | 1250 |
| Voll-Bildfrequenz | 50 Hz |
| Zeit für das Rastern einer Zeile | 16 µs |
| Totzeilen | 98 |
| Totzeit | 1,6 ms |
| | |
| Winkel β_{z} zwischen zwei Zeilen im Bild bei Winkel des Bildspiegels α_{z} = 15° | 0,013° |
| Zeilenabstand bei 6 m entferntem Bildschirm (ohne Projektionsoptik) | 1,4 mm |
| Bildhöhe bei 6 m Abstand | 1,6 m |
| Eine gerasterte Zeile hat dabei eine effektive Bildpunktanzahl (Nₚ) | 1440 |
| Ein Seitenverhältnis 16:9 ergibt einen Ablenkwinkel des Zeilenspiegels von | 26,77° |
| Winkel βₚ zwischen zwei Bildpunkten in einer Zeile bei Winkel des Zeilenspiegels αₚ = 26,7° | 0,0185° |
| Bildpunktabstand bei 6 m entferntem Bildschirm (ohne Projektionsoptik) | 2 mm |
| Bildbreite bei 6 m Abstand | 2,8 m |
| | |
| Zeit für das Rastern einer Zeile | 16 µs |
| Totzeit | 1,6 µs |

Daraus lassen sich grundsätzlich folgende Verhältnisse ableiten:

Bei den Darstellungsverfahren PAL non-interlaced und HDTV interlaced ergeben sich 49 Totzeilen mit einer Totzeit von 1,6 ms zwischen zwei Bildern:
- Die Totzeit zwischen zwei Zeilen beträgt 3,2 µs.
- Aus dem Ablenkwinkel α_{z} = 15° des Bildspiegels und der effektiven Zeilenzahl N_{z} = 576 bei den beiden Darstellungsverfahren resultieren gleiche Werte für den Winkel zwischen zwei Zeilen β_{z} = 0,026°.
- Bei der Darstellungsweise gemäß PAL non-interlaced, also beim Seitenverhältnis 4:3, ergibt sich ein Ablenkwinkel des Zeilenspiegels αₚ = 20°. Im Zusammenhang mit der effektiven Bildpunktanzahl pro Zeile von 720 ergibt sich ein Winkel βₚ = 0,0277° zwischen zwei nebeneinanderliegenden Bildpunkten einer Zeile.
   Bei der Darstellungsweise nach HDTV interlaced, Seitenverhältnis 16:9, ergibt sich ein Ablenkwinkel des Zeilenspiegels αₚ = 26,77°. Im Zusammenhang mit der effektiven Bildpunktanzahl in der Zeile von 1440 ergibt sich ein Winkel βₚ = 0,0185° zwischen zwei aneinanderliegenden Bildpunkten einer Zeile.

- Bei der Darstellungsweise gemäß HDTV non-interlaced ergeben sich 98 Totzeilen mit einer Totzeit von 1,6 ms zwischen zwei Bildern.
- Die Totzeit zwischen zwei Zeilen beträgt 1,6 µs.
   Hier ergibt sich durch die Verdopplung der effektiven Zeilenzahl N_{z} = 1152 eine Halbierung des Winkels zwischen benachbarten Zeilen auf β_{z} = 0,013°.
- Bei der Darstellungsweise gemäß HDTV non-interlaced mit einem Seitenverhältnis von 16:9 ergibt sich ein Ablenkwinkel des Zeilenspiegels αₚ = 26,77°. Im Zusammenhang mit der effektiven Bildpunktanzahl pro Zeile von 1440 erhält man einen Winkel βₚ = 0,0185° zwischen zwei nebeneinanderliegenden Bildpunkten einer Zeile.

Gemeinsamkeiten bezüglich der Abbildungseigenschaften der kollinearen Lichtbündel 39, 39' ergeben sich somit bei der Bildablenkung bei den Verfahren PAL non-interlaced und HDTV interlaced. Die Totzeit zwischen zwei Bildern beträgt jedoch bei allen Darstellungsverfahren gemeinsam 1,6 ms.

Durch mathematisch-elektronische Verfahren besteht die Möglichkeit, jegliche Bildformate auf die Abbildungseigenschaften der jeweiligen Vorrichtung abzugleichen, damit die Bildqualität verbessert wird (wie beispielsweise in der DE 195 17 357 C1 erläutert ist). Zur Einhaltung der dabei zu berücksichtigende Bedingungen ist das erfindungsgemäße Rastern, simultan in mehreren Zeilen bzw. mehreren Bildpunkten in einer Zeile, außerordentlich vorteilhaft, wie nachfolgend am Beispiel einer Vorrichtung mit der Bilddarstellung gemäß HDTV non-interiaced beim gleichzeitigen Schreiben von mehreren Zeilen während des Rastern eines Bildes deutlicher wird.

Die vorstehend gemachten Angaben für das simultane Darstellen von Bildpunkten innerhalb verschiedener Zeilen sind auf die Ausführungen zum Mehrfachrastem von mehreren Bildpunkten in der gleichen Zeile übertragbar, indem die angegebenen Größen, Größenverhältnisse, Zeiten und Zeitverhältnisse entsprechend den vorstehenden Angaben verwendet werden, wobei die Indizes "z" durch "p" zu ersetzen sind. Die Indizes "z" beziehen sich auf die zu rasternden Zeilen innerhalb eines Bildes, während die Indizes "p" den simultan zu rastemden Bildpunkten innerhalb einer Zeile zugeordnet sind.

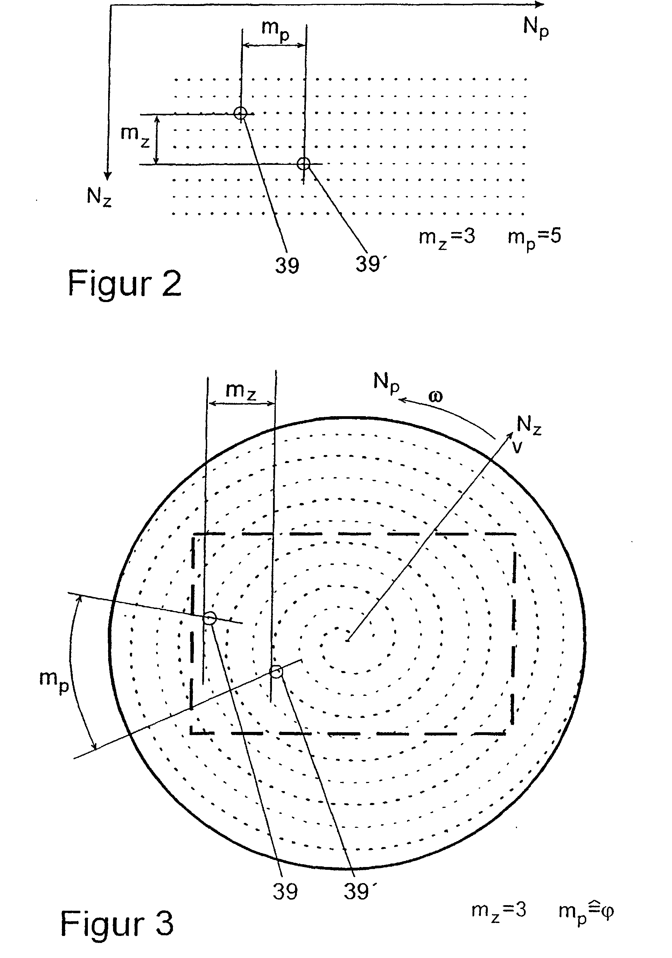

Die weiteren Ausführungen gelten gleichermaßen auch für ein beliebiges Schreiben von Bildpunkten in Spuren, unabhängig von einer Zeilennorm, beispielsweise in Polarkoordinaten für eine Kuppelprojektion, wie nachfolgend anhand von Fig. 3 noch verdeutlicht wird.

Unabhängig von der Form des Bildschirms 43 und seines Abstands von der aus Zeilenspiegel 41 und Bildspiegel 42 bestehenden Ablenkeinrichtung, werden die Bildpunkte immer scharf dargestellt. Dies ist darauf zurückzuführen, daß die auf den Schirm auftreffenden Lichtbündel nahezu parallel und deren Divergenz durch die der Laserquellen 10, 20, 30 wesentlich bestimmt ist. Wenn der Abstand zwischen Schirm 43 und Ablenkeinrichtung allerdings vergrößert wird, ändert sich auch die Bildgröße. Dies ist möglich, weil sowohl die Zeilen- als auch die Bildablenkung winkelproportional sind, was sich auch aus der in Fig. 1 gezeigten Ablenkung mittels der Spiegel 41 und 42 ergibt.

Bei dem Ausführungsbeispiel von Fig. 1 werden aber die einzelnen Zeilen nicht mit einem einzigen Lichtbündel gerastert, sondern zwei Lichtbündel 39 und 39' über den Zeilenspiegel 41 synchron in verschiedenen Zeilen geführt. Dadurch kann einerseits eine höhere Leuchtdichte im dargestellten Bild erreicht werden, andererseits kann auch ein Bild mit der Ablenkgeschwindigkeit des Zeilenablenkspiegels 41 mit doppelter Zeilenzahl geschrieben werden, was, wie vorstehend schon erläutert wurde, vor allen Dingen Vorteile für die Auslegung eines als Zeilenspiegel 41 beim Ausführungsbeispiel verwendeten Polygonspiegels hat bzw. es sogar gestattet, mit verfügbaren Polygonspiegeln üblicher Ablenkgeschwindigkeit HDTV-Bilder im non-interlaced-Betrieb darzustellen.

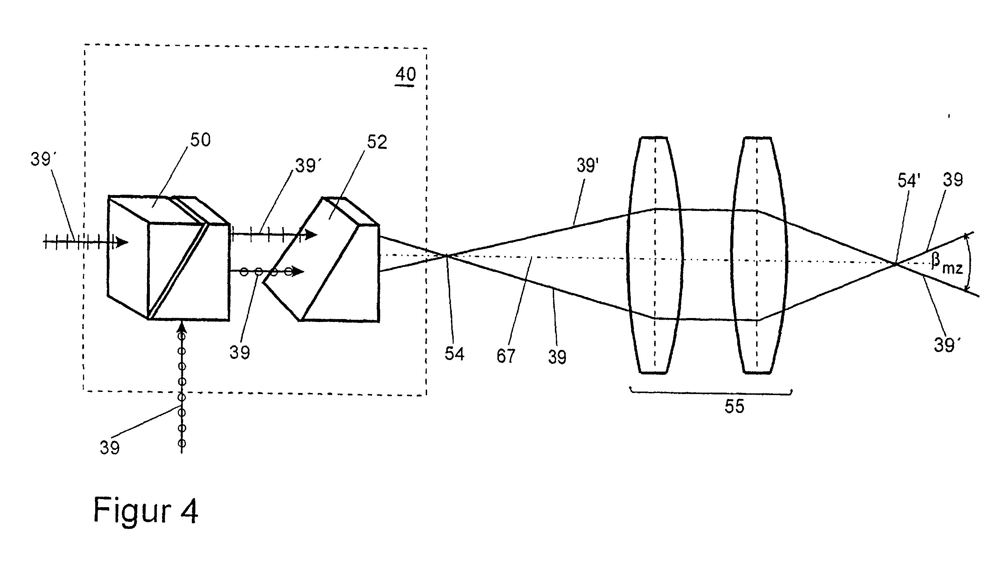

Im Ausführungsbeispiel verlassen die beiden Lichtbündel 39 und 39' den Bildspiegel 42 aufgrund des optischen Systems 40 zueinander unter einem konstanten Winkel, dessen Größe dem für diese Betriebsart gewählten Zeilenabstand der Zahl m_{z} proportional ist. Wie dies im einzelnen bewirkt werden kann, wird später anhand der Ausführungsbeispiele von Fig. 4 bis Fig. 10 erläutert.

Aufgrund von Fig. 1 kann man nun auch den durch das optische System 40 definierten Winkel zwischen den Lichtbündeln 39 und 39' bestimmen. Bei einem Gesamtablenkwinkel α_{z} des Bildspiegels 42 für die N_{z} Zeilen des darzustellenden Videobildes erhält man für eine Differenz von m_{z} Zeilen zwischen den Lichtbündeln 39 und 39' einen Winkel der Größe β_{mZ} = m_{z} × αₘ/N_{z}. Der Winkelabstand zweier unmittelbar benachbarter Zeilen (m_{z} = 1) wird im folgenden β_{z} = α_{z}/N_{z} genannt. In entsprechender Weise gilt für das Schreiben unterschiedlicher Bildpunkte (mₚ ≠ 0) βₘₚ = mₚ · αₚ/Nₚ und βₚ = αₚ/Nₚ mit αₚ dem gesamten gerasterten Zeilenöffnungswinkel und Nₚ der Bildpunktanzahl in einer Zeile.

Grundsätzlich sind mehrere Fälle für das Rastern zu unterscheiden, je nachdem, ob die Zeilenabstandszahl m_{z} gerade oder ungerade gewählt wird und ob ein einzelnes Lichtbündel gerade oder ungerade oder ganzzahlige Zeilenzahlen schreibt. Nur die für die Bilddarstellung wichtigsten Kombinationen sollen nachfolgend dargestellt werden.

### Fall 1:

Die Zeilenabstandszahl m_{z} ist ungerade, und das Lichtbündel 39 schreibt nur ungerade Zeilen. Dies hat zur Folge, daß beim Rastern eines Bildes jede Bildzeile höchstens einmal geschrieben wird.

Dieser Fall wird vornehmlich zur Erhöhung der Zeilenanzahl pro Bild bei gleichbleibender Ablenkfrequenz des Zeilenspiegels eingesetzt, wenngleich es auch möglich ist, bei Verdopplung der Zeilenzahl unmittelbar benachbarte Zeilen mit der gleichen Videoinformation zu schreiben, wodurch im Zeitmittel ausschließlich eine Erhöhung der Lichtleistung des Bildes erfolgt.

| | | | | | |
|---|---|---|---|---|---|
| Lichtbündel 39 schreibt immer ungerade Zeilen | 1 | 3 | 5 | 7 | ... |
| Lichtbündel 39' schreibt immer gerade Zeilen | | | | | |
| und zwar bei m_{z} = 1 | 2 | 4 | 6 | 8 | ... |
| m_{z} = 3 | 4 | 6 | 8 | 10 | ... |
| m_{z} = 5 | 6 | 8 | 10 | 12 | ... |
| usw. | | | | | |

Bei der Darstellung gemäß HDTV non-interlaced beträgt der Winkel zwischen zwei Zeilen β_{z} = 0,013°, daher ergeben sich in Abhängigkeit von der Zeilenabstandszahl m_{z} die folgenden Zeilenstrahlwinkel β_{mz}:

| | |
|---|---|
| m_{z} = 1 | β_{1Z} = 0,013° |
| m_{z} = 3 | β_{2Z} = 0,039° |
| m_{z} = 5 | β_{3Z} = 0,065° |
| m_{z} = 7 | β_{7Z} = 0,091° |
| m_{z} = 9 | β_{9Z} = 0,117° und so weiter. |

### Fall 2:

Die Zeilenabstandszahl m_{z} ist gerade, und das Lichtbündel 39 schreibt nacheinander alle Zeilen. Dies hat zur Folge, daß während des Rasterns eines Bildes die von den Lichtbündeln 39 und 39' beleuchteten Zeilen zweimal geschrieben werden. Dieser Fall dient vornehmlich zur Erhöhung der Lichtleistung des dargestellten Bildes:

| | | | | | | |
|---|---|---|---|---|---|---|
| Lichtbündel 39 schreibt jede Zeile | 1 | 2 | 3 | 4 | ... | |
| Lichtbündel 39' schreibt die Zeilen | | | | | | |
| und zwar bei | m_{z} = 2 | 3 | 4 | 5 | 6 | ... |
| | m_{z} = 4 | 5 | 6 | 7 | 8 | ... |
| | m_{z} = 6 | 7 | 8 | 9 | 10 | ... |
| | usw. | | | | | |

Man erkennt daraus, daß beispielsweise die Zeilen 3, 4 usw. zwar zu verschiedenen Zeiten, jedoch innerhalb eines Bildes doppelt geschrieben werden.

Bei HDTV non-interlaced beträgt der Ablenkwinkel zwischen zwei Zeilen β_{z} = 0,013°, daher ergibt sich in Abhängigkeit von der Zeilenabstandszahl m_{z} ein Zeilenstrahlwinkel β_{mz}:

| | |
|---|---|
| m_{z} = 2 | β_{2Z}= 0,026° |
| m_{z} = 4 | β_{4Z} = 0,052° |
| m_{z} = 6 | β_{6Z} = 0,078° |
| m_{z} = 8 | β_{8Z} = 0,104° |
| m_{z} = 10 | β_{10Z} = 0,13° und so weiter. |

Im Fall 1 wurden die Zeilenstrahlwinkel β_{mz} zwischen den Lichtbündeln 39 und 39' *so* berechnet, daß die simultan geschriebenen Zeilen immer gleiche Winkelabstande haben, während im Fall 2 die Winkel β_{mz} der Lichtbündel 39 und 39' so berechnet sind, daß alle Zeilen genau aufeinander geschrieben werden. Dies ist insbesondere für die oben angegebene Ausgestaltung für das Schreiben zweier verschiedener Bildpunkte (mₚ ≠ 0) in einer Zeile durch die Lichtbündel 39 und 39' zur Leistungsskalierung zweckmäßig.

Es hat sich ferner gezeigt, daß bei geringen Abweichungen realer optischer Anordnungen von den genau berechneten Winkeln β_{mz} der Lichtbündel 39 und 39' noch qualitativ hochwertige Bilder erzeugt werden können, da Abweichungen im Winkel β_{mz} innerhalb einer gegebenen Vorrichtung und gleichermaßen innerhalb eines Bildrasterintervalls konstant sind, so daß aufgrund kleiner Abweichungen keine merklichen Bildfehler erzeugt werden.

Bei großen Fehlerwinkeln kann man jedoch auch eine entsprechend dem Winkel β_{mz} zeitkorrigierte Ansteuerung der Modulatoren in den Lichtquellen 80 und 80' durchführen. Diese Variante ist Insbesondere bei einer Leistungserhöhung durch Mehrfachrastem jeder Zeile ausreichend. Die Anforderungen an die Fertigungsgenauigkeit der optischen Einrichtung sind sogar geringer als beim Stand der Technik, weil Abbildungsfehler durch eine entsprechend ausgestaltete elektronische Ansteuerung so beeinflußt werden können, daß diese vom Betrachter nicht wahrgenommen werden.

In den Figuren 2 und 3 sind zur Veranschaulichung der Größen m_{z} und mₚ noch einmal schematisch zwei Rasterweisen gezeigt. Mit zwei Punkten ist dabei jeweils der Auftreffpunkt des Lichtbündels 39 und des anderen Lichtbündels 39' kenntlich gemacht. Die Ablenkrichtungen für das Zeilen- und Bildrastern sind ferner durch zwei mit Nₚ bzw. N_{z} bezeichnete Vektoren verdeutlicht. Fig. 2 zeigt ein zeilen- und bildmäßiges Rastem, wie es mit Bildspiegel 42 und Zeilenspiegel 41 erzeugt wird, mit den eingezeichneten Größen für m_{z} und mₚ in Bild- und Zeilenrichtung, wie es anhand des Beispiels von Fig. 1 näher erläutert wurde.

Fig. 3 zeigt dagegen eine Spiralrasterung, beispielsweise für eine Kuppelprojektion in Kugelsegmenten. Allerdings ist mit der Spiralrasterung auch das Rastern im Rechteck möglich, wie in Fig. 3 durch unterbrochene Linien angedeutet ist. Dann werden die Lichtbündel, wenn sie außerhalb des Rechtecks rastern, zweckmäßigerweise dunkelgetastet. Diese Spiralrasterung kann beispielsweise durch einen in zwei Richtungen kippbaren Galvanometerspiegel durch entsprechende sinusförmige (in eine Richtung) und kosinusförmige Ansteuerung (in die andere Richtung) mit der Winkelgeschwindigkeit ω erzeugt werden. Bei konstanter Amplitude des Sinus- bzw. Kosinusspannungsverlaufs werden die Lichtbündel 39 und 39' kreisförmig abgelenkt. Wird dagegen die Amplitude zeitlich gleichmäßig erhöht, entstehen die gezeigten Spiralen.

Weiter sind in Figur 3 die Größen m_{z} = 3 und mₚ eingezeichnet, um deutlich zu machen, wie die Definition von Zeilen und Bildpunkten bei anderen als rechteckigen Rasterarten gewählt werden sollte. Bei der Spiralrasterung gemäß Fig. 3 erfolgt die Zählung der Zeilen in Radial- und die Zählung der Bildpunkte in Umfangsrichtung.

Im folgenden soll nun anhand einiger Beispiele gezeigt werden, wie das optische System 40 für einen praktischen Einsatz im Ausführungsbeispiel von Fig. 1 verwirklicht werden kann.

Fig. 4 zeigt eine Draufsicht auf ein beispielhaft gezeigtes optisches System 40, bei dem die beiden Lichtbündel 39 und 39' senkrecht zueinander polarisiert sind und mit Hilfe eines in umgekehrt zur bestimmungsgemäßen Betriebsweise angeordneten Polarisationsstrahlteilers 50 zusammengeführt werden.

Nach Veriassen des Polarisationsstrahlteilers 50 treten beide Lichtbündel 39, 39' In ein Prisma 52 ein, das aus doppelbrechendem Material besteht und mit dem aufgrund unterschiedlicher Brechungsindizes für die beiden Polarisationsrichtungen ein Neigungswinkel zwischen den beiden Lichtbündeln 39 und 39' erzeugt wird.

Gemäß Fig. 4 verlassen die Lichtbündel 39, 39' den Polarisationsstrahlteiler 50 parallel verlaufend in einem schon durch dessen Einfallsbedingungen vorgegebenen Abstand. Aufgrund der mit dem Prisma 52 herbeigeführten Winkeländerung zwischen beiden Lichtbündeln 39, 39' werden diese in einem gemeinsamen Punkt 54 zusammengeführt. Dieser gemeinsame Punkt 54 sollte möglichst zwischen dem optischen System 40 und dem Bildspiegel 42 liegen, damit die Zeilendichte im Videobild unabhängig vom Abstand des Projektionsschirms 43 von der Ablenkeinrichtung wird.

Am günstigsten wird das optische System 40 (bei m_{z} ≠0; mₚ = 0) so dimensioniert, daß der Punkt 54 auf der Oberfläche des Bildspiegels 42 liegt, da dann der durch das optische System 40 eingestellte Winkel im wesentlichen am gleichen Ort wie die Winkeländerung zum Zeilenrastern des Videobildes erfolgt. Das bedeutet, die Zeilenrasterung geht für alle Zeilen vom selben Ort aus.

Andererseits kann es für bestimmte Anwendungen, insbesondere mₚ ≠ 0; m_{z} = 0, auch vorteilhaft sein, diesen Punkt 54 auf die reflektierende Facette des als Zeilenspiegel 41 verwendeten Polygonspiegels zu legen, da dann die Zeilenablenkung für beide Lichtbündel 39 und 39' am gleichen Punkt der Facette erfolgt.

Soll der Punkt 54 auf einen anderen Punkt 54' verschoben werden, so läßt sich dies durch eine weitere Optik 55 bewirken, die dazu vorteilhafterweise als afokales Linsensystem ausgestaltet ist. Mit einer solchen Optik 55 kann man zusätzlich auch den Winkel ändern, unter dem die Lichtbündel 39 und 39' im Punkt 54' zusammenlaufen. Daher ergibt sich durch ein solches optisches System ein weiterer Freiheitsgrad, mit dem sowohl der Winkel der Lichtbündel 39, 39' als auch der gemeinsame Ort für die gleichmäßige Ablenkung bestimmt werden können. Dies ist vorteilhaft, denn bei sehr kleinen Zahlen m_{z} oder mₚ kommt man sehr schnell an die Grenzen mechanischer Machbarkeit, wie vor allem die später angegebenen Zahlenbeispiele zeigen.

Dieses zusätzliche optische System 55 kann weiter in allen folgenden Beispielen eingesetzt werden. Zur einfacheren Darstellung wurde allerdings für diese auf eine tiefergehendere Erörterung der Funktionsweise mit dem optischen System 55 verzichtet. Unter Zuhilfenahme der Prinzipien der geometrischen Optik kann der Durchschnittsfachmann jedoch die folgenden Beispiele immer mit weiteren optischen Systemen 55 verbessern und modifizieren. Gleichermaßen können auch alle anderen vorstehenden, die Lage des gemeinsamen Ortes 54 betreffenden Ausführungen auf alle anderen Beispiele bezogen werden.

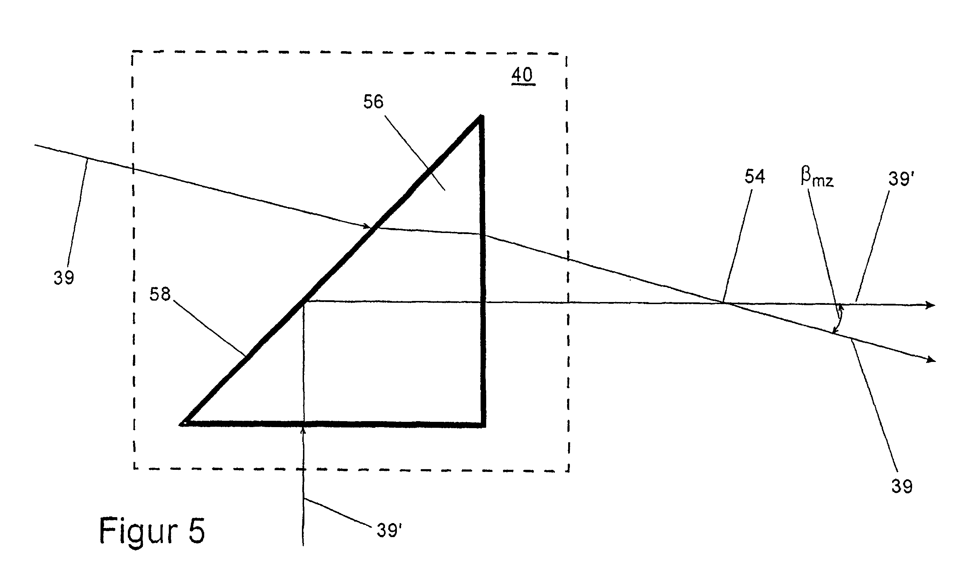

In Fig. 5 ist ein weiteres Ausführungsbeispiel für ein optisches System 40 gezeigt, bei dem weder doppelbrechendes Material noch unterschiedliche Polarisationsrichtungen für die Lichtbündel 39 und 39' vorgesehen werden müssen. Das optische System 40 besteht dabei aus einem Prisma 56, in welches das Lichtbündel 39' unter einem Winkel einfällt, bei dem es an einer Fläche 58 des Prismas 56 totalreflektiert wird. Dagegen fällt das Lichtbündel 39 in diese Prismenfläche 58 ein und wird im Prisma 56 gebrochen, wodurch sich ein definierter Winkel zwischen den ausfallenden Lichtbündeln 39 und 39' ergibt. Die Lichtbündel 39 und 39' laufen in dem schon vorher diskutierten Punkt 54 zusammen und danach unter gleichem Winkel auseinander, wobei dieser Winkel, wie vorstehend erläutert, über die Zeilenzahl mz festgelegt ist und sowohl durch Auslegung der geometrischen Bedingungen als auch die Winkel des Prismas 56 selbst bestimmt wird.

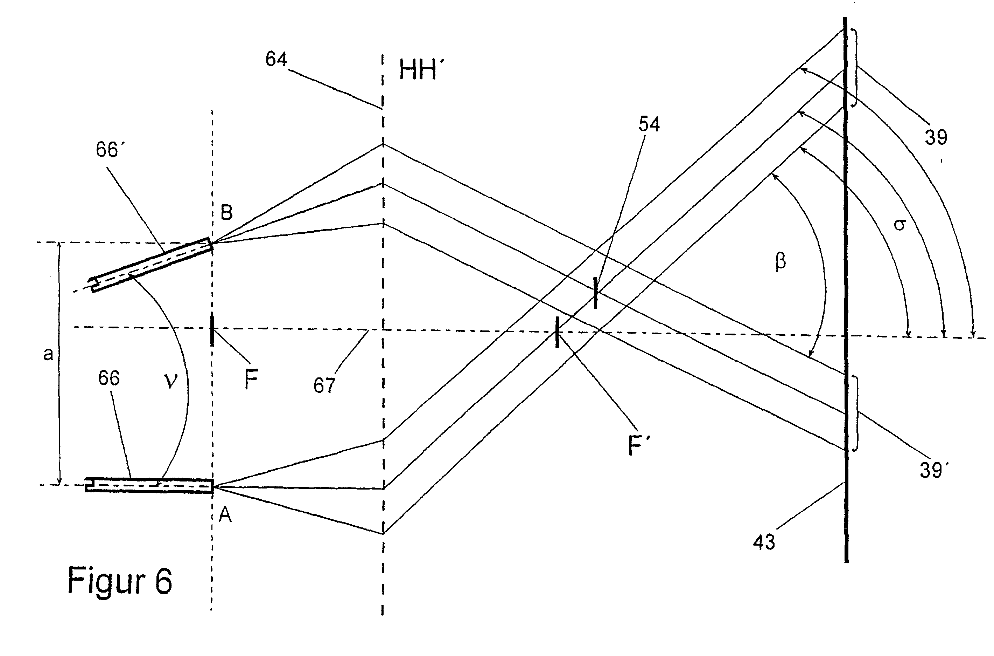

Figur 6 verdeutlicht grundsätzliche Abbildungsverhältnisse für die Vereinigung von Lichtbündeln 39, 39', die aus Quellpunkten A und B austreten, wobei der Winkel β und der Ort 54 mit einem durch eine Hauptebene HH' gekennzeichneten fokussierenden optischen Systems 64 bestimmt werden. Im Beispiel von Figur 6 werden die Quellpunkte A und B beispielhaft durch die Lichtaustrittsflächen von Lichtleitfasern 66 und 66' gebildet. Die Quellpunkte A und B liegen asymmetrisch zur optischen Achse 67 des optischen Systems 64 und in der objektseitigen Brennebene F der Abbildungsoptik 64. Sämtliche von dem jeweiligen Quellpunkt A, B ausgehenden Lichtbündel, die in das optische System 64 einfallen, veriassen diese unter dem gleichen Winkel σ zur optischen Achse 67 des Abbildungssystems. Der Abstand der Quellpunkte A und B bestimmt dabei den Winkel β.

Die Richtung der Hauptstrahlen, also im Beispiel die Ausrichtungen der Lichtleitfasern 66 und 66' bezüglich der optischen Achse der Abbildungsoptik 64 legt dagegen die Lage des gemeinsamen Punktes 54 fest. Der Winkel ν ist im Beispiel von Fig. 6 zwischen den Faserkernen so gewählt, daß die zwei Lichtbündel 39 und 39' vor der Abbildungsoptik auseinanderlaufen. Die Abbildungsoptik 64 vereinigt dann die Lichtbündel im gemeinsamen Punkt 54, der im Beispiel hinter dem bildseitigen Brennpunkt F' und in Abstand zur optischen Achse 67 liegt.

Wie daraus erkennbar ist, kann der Ort des gemeinsamen Punktes 54 durch ein Schrägstellen eines Faserkems oder beider Faserkerne am Faserende in gewissen Grenzen zwischen den Hauptebenen HH' der Abbildungsoptik 64 und dem Bildschirm 43 variiert werden. Ein Winkel von kleiner 30° zur optischen Achse hat sich für praktisch realisierte optische Systeme als besonders vorteilhaft herausgestellt.

Diese Betrachtungen gelten sowohl für die gleichzeitige Darstellung von mehr als einer Zeile eines Bildes (m_{z} ≠ 0) bei vertikaler Anordnung der Quellpunkte als auch für die Darstellung von mehr als einem Bildpunkt (mₚ ≠ 0) in einer Zeile bei horizontaler Anordnung der Quellpunkte.

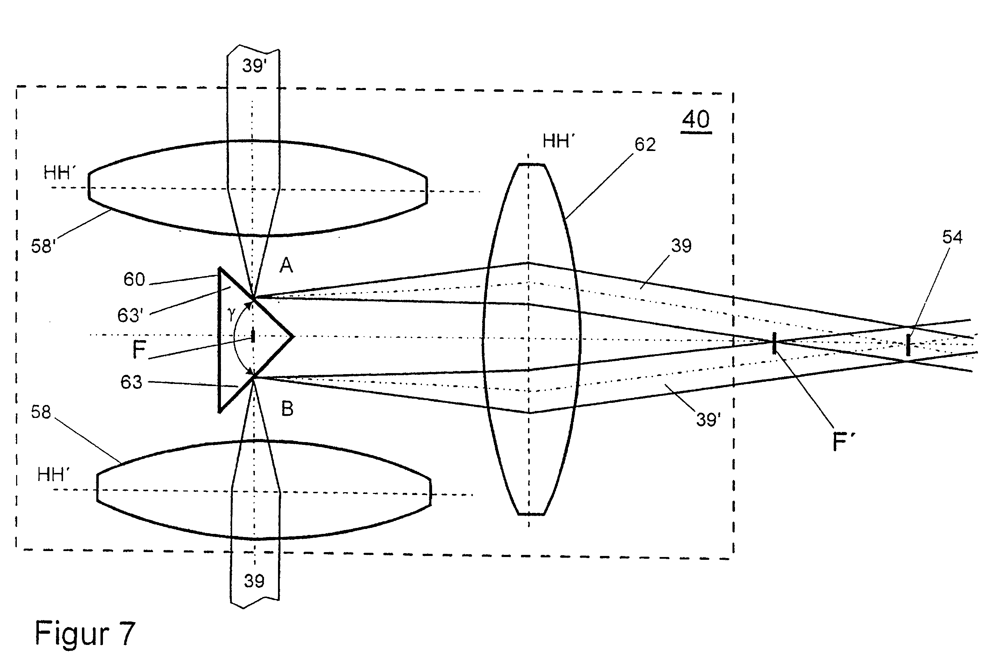

In Fig. 7 ist weiter ein Ausführungsbeispiel für die optische Einrichtung 40 gezeigt, welches sowohl Linsen als auch Spiegel verwendet. Bei der Anordnung des Ausführungsbeispiels von Fig. 7 wurde insbesondere darauf geachtet, daß jeder der einfallenden parallelen Strahlen 39 und 39' nach Verlassen des optischen Systems wieder parallel ist.

Bei diesem Ausführungsbeispiel werden die Lichtbündel 39 und 39' mit Linsen 58 und 58' auf einen Spiegel 60 fokussiert, wodurch an dessen Oberfläche die genannten Quellpunkte A und B erzeugt werden. Nach Reflexion mit Hilfe einer weiteren Linse 62 werden dann die Lichtbündel, wie schon bei Fig. 6 diskutiert, parallelisiert.

Die bildseitigen Brennpunkte der Linsen 58 und 58' liegen demgemäß auf der reflektierenden Spiegelfläche und ferner in der Brennebene der Linse 62, wodurch wieder Parallelität der auslaufenden Lichtbündel 39 und 39' erreicht wird.

Die Art des Zusammenführens der Lichtbündel ist wesentlich durch die Form des Spiegels 60 bestimmt, der im Ausführungsbeispiel von Fig. 7 aus zwei Teilspiegelflächen 63 und 63' besteht, die beim Ausführungsbeispiel unter rechtem Winkel y zusammenlaufen, wobei das Lichtbündel 39 von der Teilfläche 63 und das Lichtbündel 39' von der Teilfläche 63' reflektiert wird.

Der Winkel der auslaufenden Lichtbündel 39' und 39 sowie auch die Lage des durch die Linse 62 erzeugten, von den Lichtbündeln 39' und 39 gemeinsam durchlaufenen Punktes 54 können beispielsweise durch Auswahl der Brennweite der Linsen 58, 58' und 62 geändert werden. Es ist femer möglich, den Winkel zwischen den Lichtbündeln 39' und 39 sowie die Lage des gemeinsamen Punktes 54 durch die Position des Spiegels 60 sowie des Winkels γ zwischen den Spiegelflächen 62 und 62' festzulegen. Wie sich derartige Änderungen auswirken, ist dem Fachmann aus den Gesetzen der geometrischen Optik bekannt und kann mit den Ausführungen zu den Darstellungen zu Fig. 4 bis Fig. 6 noch besser verstanden werden.

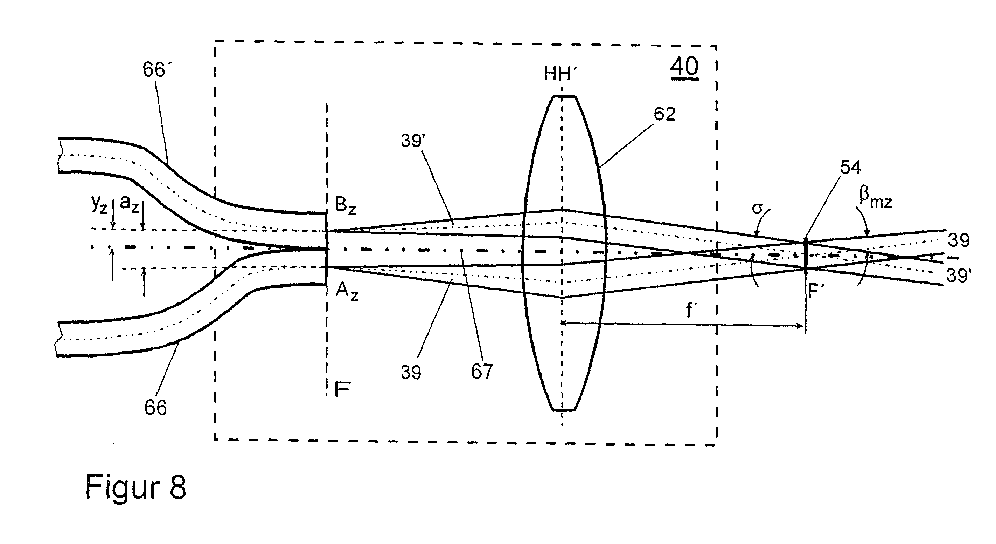

In Fig. 8 ist ein weiteres Ausführungsbeispiel für das optische System 40 gezeigt, bei dem die Quellpunkte A, B wieder die Austrittsflächen der Kerne zweier Lichtleitfasern 66 und 66' sind. Das Ausführungsbeispiel weist eine fokussierende Einrichtung, die Linse 62, auf, in deren eingangsseitiger Brennebene die Austrittsflächen zweier Lichtleitfasern 66 und 66' angeordnet sind, welche die Quellpunkte A_{z} und B_{z} bilden. Der Quellpunkt A_{z} liefert das Lichtbündel 39 sowie der Quellpunkt B_{z} das Lichtbündel 39'. Mit der unterbrochenen Linie ist der jeweilige Kern der Lichtleitfasem 66 und 66' gekennzeichnet, in dem die Lichtbündel 39 und 39' geführt werden.

Gemäß Figur 8 verlaufen die Mittelachsen der Faserkerne der Lichtleitfasern 66 und 66' in einem Abstand a_{z} parallel zueinander (ν_{z} = 0°) und jeweils im gleichen Abstand y_{z} von der optischen Achse 67. Die Faserenden befinden sich dabei in der objektseitigen Brennebene F. Die Hauptstrahlen der Bildpunkte A_{z} und B_{z} schneiden sich im bildseitigen Brennpunkt F' im Abstand f' von den Hauptebenen der Linse 64 und bilden den gemeinsamen Punkt 54.

Der Winkel dieser Strahlen und aller anderen von den Quellpunkten A_{z} und B_{z} ausgehender Strahlen zur optischen Achse 67 ist betragsmäßig immer gleich σ. Der Winkel von 2σ entspricht dem Winkel β_{mz} zwischen zwei Zeilen, die beim Bildrastem in einem Abstand von m_{z} Zeilen geschrieben werden. Die Größe der benötigten Winkel und die Wahl von m_{z} wird nun im einzelnen erfäutert:

Für den vorstehend beschriebenen Fall 1 ergibt sich für den Abstand der Quellpunkte A_{z} und B_{z} bei

| | |
|---|---|
| m_{z} = 1 | a_{1z} = 6 µm |
| m_{z} = 3 | a_{3z} = 17 µm |
| m_{z} = 5 | a_{5z} = 28 µm |
| m_{z} =7 | a_{7z} = 40 µm |
| m_{z} = 9 | a_{9z} = 51 µm und so weiter. |

Nacheinander werden so zum Beispiel bei m_{z} = 9 gemeinsam gerastert
1. Zeile und 10. Zeile
3. Zeile und 12. Zeile
5. Zeile und 14. Zeile
7. Zeile und 16. Zeile
9. Zeile und 18. Zeile
11. Zeile und 20. Zeile und so weiter.

Bis auf einen Bereich am Bildanfang und am Bildende wird praktisch mit der doppelten Zeilenanzahl ein Bild geschrieben und zwar jede Zeile nur einmal.
Wie die Zeilen 2, 4, 6 und 8, die zunächst nicht dargestellt werden können, zur Abbildung auf den Schirm gebracht werden, wird weiter unten beschrieben.

Für den vorstehend beschriebenen Fall 2 ergibt sich für den Abstand der Quellpunkte A_{z} und B_{z} bei

| | |
|---|---|
| m_{z} = 2 | a_{2z}= 11 µm |
| m_{z} = 4 | a_{4z}= 23 µm |
| m_{z} = 6 | a_{6z} = 34 µm |
| m_{z} = 8 | a_{8z} = 45 µm |
| m_{z} = 10 | a_{10z} = 57 µm und so weiter. |

Nacheinander werden so zum Beispiel bei m_{z} = 10 gemeinsam gerastert:
1. Zeile und 11. Zeile
2. Zeile und 12. Zeile
3. Zeile und 13. Zeile
4. Zeile und 14. Zeile
5. Zeile und 15. Zeile
6. Zeile und 16. Zeile
7. Zeile und 17. Zelle
8. Zeile und 18. Zelle
9. Zeile und 19. Zeile
10. Zeile und 20. Zeile
11. Zeile und 21. Zeile und so weiter.

Ab der Zeile 10 werden die folgenden Zeilen bis auf einen Bereich am Bildende immer zweimal geschrieben und zwar zu verschiedenen Zeitpunkten.

Wie die Zeilen 1, 2, 3, 4, 5, 6, 7, 8, 9 und 10, die zunächst nicht zweimal geschrieben werden können, zur nochmaligen Abbildung auf den Schirm gebracht werden, wird ebenfalls weiter unten beschrieben.

Anhand des Ausführungsbeispiels von Fig. 8 sollen einige Beispiele zahlenmäßig dargestellt werden, um die Dimensionierung des optischen Systems 40 in einem Videosystem näher zu verdeutlichen.

Für die Linse 62 von Fig. 8 hat sich beim Einsatz in der Vorrichtung von Fig. 1 eine Brennweite von 1 bis 7 cm praktisch als vorteilhaft herausgestellt, die mehrere Randbedingungen für die Dimensionierung eines Videosystems in einfacher Weise zu erfüllen gestattet. Insbesondere wurde für das Ausführungsbeispiel von Fig. 1 aufgrund der Eigenschaften der verwendeten Wellenleiter eine Linse 62 mit einer Brennweite von 2,5 cm eingesetzt.

Der Bildspiegel 42 (der Schwenkspiegel) ließ sich im Ausführungsbeispiel für das Rastem von N_{z} Zeilen um α_{z} = 15° schwenken. Daraus und aus einer Zeilenzahl N_{z} von 1152 errechnet sich für den Zeilenunterschied der synchron gerasterten Lichtbündel bei der Zeilenabstandszahl m_{Z} = 1 ein Winkel von β_{1Z} = 0,013° zwischen den zwei aneinanderliegenden Zeilen, was bei der genannten Brennweite von 2,5 cm einen Abstand zwischen den Kernen der Lichtleitfasern 66 und 66' von 6 µm für die Einstellung des verlangten Winkels erfordert. Dieser Abstand ist sehr klein gegenüber dem Durchmesser üblicher Lichtleitfasern 66 und 66' und praktisch kaum zu verwirklichen, vor allem wenn eine Faser mit einem Kemdurchmesser von ungefähr 6 µm verwendet wird. Bei kleineren Kerndurchmessem erschwert ein Übersprechen zwischen den Lichtleitfasem aufgrund Leckfeldkopplung (evanescent field coupling) die getrennte Lichtausbreitung der Lichtbündel 39 und 39' bis zum Bildschirm.

Diese Problematik kann umgangen werden, wenn man die Zeilenabstandszahl m_{z} größer 1 wählt. Zum Beispiel werden bei m_{z} = 5 mit dem Lichtbündel 39 die Zeilen 1, 3, 5, 7 und beispielsweise mit dem Lichtbündel 39' die Zeilen 6, 8, 10, 12 simultan gerastert. Dann kommt man schon auf einen Abstand zwischen den Kernen der Lichtleitfasern 66 und 66' von ungefähr 28 µm.

Bei noch größeren Zahlen als m_{z} = 5 erhöht sich dieser Abstand. Bei m_{z} = 576 und N = 1152 könnte man mit dem Lichtbündel 39 sogar die obere Hälfte eines Bildes und mit dem Lichtbündel 39' die untere Hälfte eines Bildes rastem. Dann sollte allerdings der gemeinsame Punkt 54 auf der ablenkenden Facette des als Polygonspiegel ausgeführten Zeilenspiegels 41 liegen, damit die Lichtbündel 39, 39' auf der Spiegelfläche vereinigt sind und kleine Spiegelabmessungen beibehalten werden können. Dies läßt sich im Ausführungsbeispiel nach Fig. 8 dadurch erreichen, daß die Hauptstrahlen der Quellpunkte A_{z} und B_{z} parallel zur optischen Achse 67 liegen, wobei diese Hauptstrahlen den gemeinsamen Punkt 54 im bildseitigen Brennpunkt F' bilden und die Facette des Polygonspiegels ebenfalls im bildseitigen Brennpunkt F' liegt.

Beim Ausführungsbeispiel von Fig. 1 wurde m_{z} für verschiedene Versuche immer klein gewählt, so daß auf ein zusätzliches optisches Linsensystem 55 gemäß Fig. 3 verzichtet werden konnte. Weiter wurde das Lichtbündel 39 durchgehend bezüglich ungerader Zeilenzahlen 1, 3, 5, 7... gerastert. Femer wurde m_{z} ebenfalls ungeradzahlig gewählt, wodurch sichergestellt ist, daß das Lichtbündel 39' nur gerade Zeilen rastert und keine einzige Zeile des Videobildes sowohl von Lichtbündel 39 als auch Lichtbündel 39' gerastert wird, wodurch eine Doppelbelichtung einzelner Zeilen durch unterschiedliche Lichtbündel 39, 39' ohne größeren Steueraufwand ausgeschlossen werden konnte.

Wie ausgeführt, ist es für eine kleine Zahl m_{z} zweckmäßig, die Kerne der Lichtleitfasem 66 und 66' bis in den Mikrometerbereich anzunähern. Dafür wurden die Mäntel der Lichtleitfasern 66 und 66' vor Zusammenfügen bis nahe an den Kern abgeschliffen und die Lichtleitfasem dann miteinander an den abgeschliffenen Flächen durch Kleben zusammengefügt.

Bei sehr kleinem Abstand der Kerne im Bereich von Mikrometern kann jedoch ein unerwünschter Effekt auftreten. Aufgrund der von Null verschiedenen Wellenlängen wird die Welle nämlich nicht vollständig im Kern einer Lichtleitfaser geführt, sondern es entsteht ein exponentiell abfallendes Leckfeld im Mantel, das beispielsweise bei zu nahen Lichtleitfasern 66 und 66' eine Anregung von Moden im Kern der jeweils anderen Lichtleitfaser 66' oder 66 verursacht, so daß eine vollständige Trennung der Lichtbündel 39' und 39 nicht erwartet werden könnte. Für die Verringerung dieses Effekts müßte man den Abstand der Kerne der Lichtleitfasem 66 und 66' wesentlich größer als 10 µm oder sogar 30 µm wählen, da derartige Keme selbst Durchmesser in der Größenordnung von 10 µm haben können. Diese Anforderung kann beispielsweise durch entsprechende Wahl der Zahl m_{Z}, die den geforderten Winkel zwischen den Uchtbündeln 39 und 39' wesentlich mitbestimmt, erfüllt werden. Bei derartigen Zahlen m_{z} > 1 entstehen je nach Wahl der Zahl m_{z} zusätzliche Zeilen, die im Ausführungsbeispiel beim Modulieren dunkelgetastet wurden.

Die bisher beschriebene Verfahrensweise führt dazu, daß ein Teil der Zeilen am Bildanfang und am Bildende nicht geschrieben wird. Je nachdem wie groß die Zeilenabstandszahl m_{z} gewählt wird, ergeben sich Zeilen, die zunächst nicht dargestellt werden können:
Am Bildanfang ergeben sich zum Beispiel bei einem ungeraden Zeilenabstandszahl m_{z} (Fall 1) die folgenden Verhältnisse

| | |
|---|---|
| m_{z} = 1 | jede Zeile wird geschrieben |
| m_{z} = 3 | 2. Zeile wird nicht geschrieben |
| m_{z} = 5 | 2. und 4. Zeile werden nicht geschrieben |
| m_{z} = 7 | 2., 4. und 6. Zeile werden nicht geschrieben |
| allgemein | (m_{z}-1)/2 Zeilen mit gerader Zeilenzahl werden nicht geschrieben |

Am Bildende werden dann im Beispiel (Fall 1) bei

| | |
|---|---|
| m_{z} = 1 | jede Zeile wird geschrieben |
| m_{z}= 3 | 1151. Zeile wird nicht geschrieben |
| m_{z} = 5 | 1149. und 1151. Zeile werden nicht geschrieben |
| m_{z} = 7 allgemein | 1147.,1149. und 1151. Zeile werden nicht geschrieben |
| | (m_{z}-1)/2 Zeilen mit ungerader Zeilenzahl werden nicht geschrieben |

Gemäß der vorhergehenden Darstellung werden die (m_{z}-1)/2 Zeilen am oberen Bildrand und (m_{z}-1)/2 Zeilen am unteren Bildrand nicht dargestellt. Bei m_{z} = 11 werden also etwa jeweils 0,5% der Bildinformation in den horizontalen Randbereichen ausgelassen.

Diese Verluste werden von einem Betrachter bei den meisten Anwendungen nicht wahrgenommen.

Gemäß einer anderen Möglichkeit wird die bei allen oben beschriebenen Videonormen (PAL, HDTV) vorhandene Bildtotzeit von 1,6 ms verwendet, um die Anfangs- und Endzeilen, die bisher nicht dargestellt werden konnten, vor- und nachzuschreiben, denn bei dem eingangs beschriebenen Videoprojektionssystem benötigt der Galvanometerspiegel eine Rückstellzeit von etwa 1 ms. Die restliche Bildtotzeit von 0,6 ms steht dann für das Schreiben von Zeilen am Bildanfang und am Bildende zur Verfügung. In der Praxis lassen sich so Bilddarstellungen mit einer Zeilenabstandszahl von etwa m_{z} < 20 ohne Informationsverlust realisieren. Die Zeilenabstandszahl kann aber auch noch weiter erhöht werden, wenn der Bildspiegel 42 so angesteuert ist, daß immer ein Bild von oben nach unten und das nächste von unten nach oben gerastert wird. Dann entfällt die Rückstellzeit und das gesamte Intervall von 1,6 ms steht voll zum Nachschreiben von Zeilen zur Verfügung.

Bei einer Zeilenabstandszahl von m_{z} = 10 ergibt sich gemäß Fall 1 folgender Modus:
am Bildanfang:
   - zunächst werden nur vom Quellpunkt A aus die Zeilen 2, 4, 6, 8 nacheinander geschrieben. Dies erfolgt innerhalb von 4.32 µs = 0,128 ms im Bereich der eigentlichen Bildtotzeit, der Quellpunkt B ist dunkel,
   - dann schreibt das Lichtbündel 39' vom Quellpunkt B die zwischengespeicherte Zeile 1 und das Lichtbündel 39 vom Quellpunkt A aus die Zeile 10 gleichzeitig. In gleicher Weise werden paarweise die Zeilen 3 und 12, 5 und 14, 7 und 16 usw. simultan dargestellt.
am Bildende:
   - vom Quellpunkt B aus wird die Zeile 1143 und vom Quellpunkt A aus die letzte Zeile 1152 gleichzeitig dargestellt,
   - in der Bildtotzeit schreibt das Lichtbündel 39 vom Quellpunkt B aus die Zeilen 1145, 1147, 1149 und 1151 nacheinander. Dies erfolgt innerhalb von 4·32 µs = 0,128 ms im Bereich der eigentlichen Bildtotzeit, der Quellpunkt A ist dunkel, d.h. das Lichtbündel 39 wird dunkelgetastet.

Für die Darstellung der Zeilen am Bildanfang und am Bildende werden also im Beispiel nur 0,256 ms benötigt (restliche Bildtotzeit 0,344 ms).

Will man auf derartige Steuerungen aber verzichten und m_{z} klein halten, sollte das oben angegebene Leckfeld verringert werden. Dies ist dadurch möglich, daß beispielsweise zwischen den Lichtleitfasern 66 und 66' an der Grenze zum Zusammenfügen eine spiegelnde Aluminiumschicht 70 aufgedampft wird. Diese schließt die elektrischen Feldstärken der Leckfelder kurz bzw. spiegelt die Leckfelder im sichtbaren Wellenlängenbereich zurück in den Kern. Dies ist jedoch unter Urnständen mit erheblichen Lichtverlusten verbunden, so daß diese mit geeigneten Maßnahmen wie der Ausbildung eines Tapers am Faserende verringert werden sollen.

Wellenleiter mit großen Brechzahlgradienten verringern aber ebenfalls die Ausbreitung der Leckfelder, so daß die wellenleitenden Bereiche dann relativ eng aneinander geführt werden können. Dies ermöglicht auch Ausführungen, bei denen das Lichtbündel 39 die Zeilen 1, 3, 5, 7... und das Lichtbündel 39' synchron dazu die Zeilen 2, 4, 6, 8... rastert. Die Zeilenabstandszahl m_{z} ist hier 1, und die Wellenleiter sollten hier kleiner bzw. ungefähr 6 µm beabstandet sein.

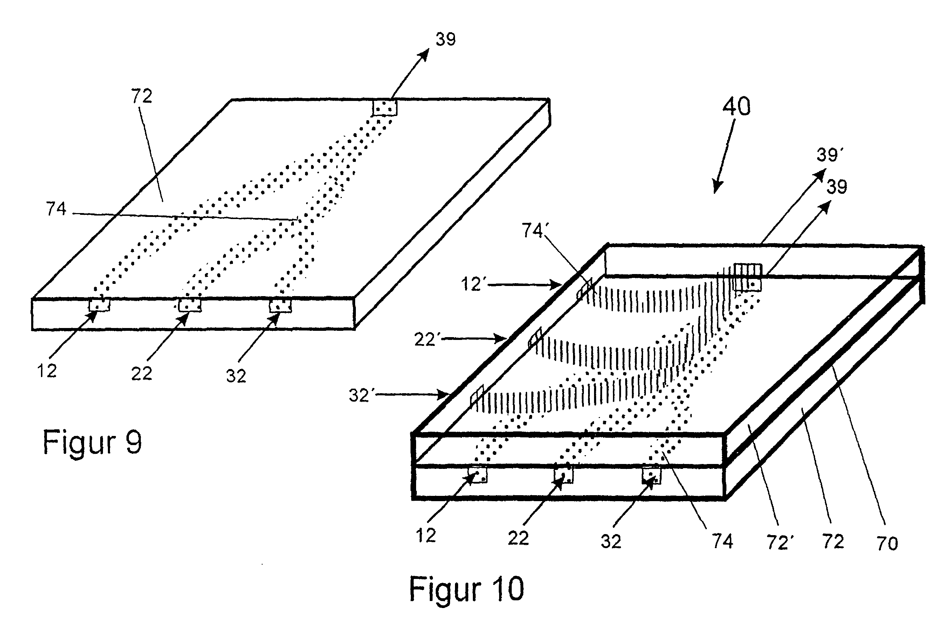

Anhand von Fig. 9 und 10 wird im folgenden ein anderes Ausführungsbeispiel mit integrierten Lichtleitern gezeigt. Dazu soll in Fig. 10 zuerst eine schematische Darstellung eines integrierten Lichtleitkopplers, der als Zusammenführeinrichtung 38 im Ausführungsbeispiel von Fig. 1 eingesetzt werden kann, gezeigt werden. Wie derartige Lichtleitkoppler verwirklicht werden können, ist im einzelnen in den deutschen Patentanmeldungen 195 03 930 und 195 03 931 dargestellt.

In einem für die integrierte Optik geeigneten Substrat 72 wird dabei eine wellenleitende Struktur 74 ausgebildet, mit der die drei Lichtbündel unterschiedlicher Wellenlänge 12, 22, 32 nach Modulation zum gemeinsamen Lichtbündel 39 zusammengeführt werden. Die Struktur 74 wurde dafür durch geeignete Dotierung des Substrats 72 erzeugt.

Durch Aneineinanderlegen der dotierten Oberflächen zweier derartiger Lichtleitkoppler, von denen eine das Lichtbündel 39 und die andere das Lichtbündel 39' erzeugt, entsteht eine in Fig. 10 gezeigte optische Einrichtung 40. Die Ausgänge der Strukturen 74 und 74' wurden dabei übereinandergelegt, so daß ein ähnliches optisches System wie das von Fig. 7, bei dem die Lichtbündel 39 und 39' in geringem Abstand aus Lichtleitern austreten, entstand. Den zur Festlegung des Winkels definierten Abstand kann man beispielsweise durch Aufsputtem einer definiert dicken Schicht 70, beispielsweise aus Polysilizium, auf die dotierten Flächen der Substrate 72 und 72' vor dem Zusammenfügen der Lichtleitfaserkoppler genau bestimmen.

Bei sehr kleinen Abständen muß man allerdings auch hier wieder mit Leckfeldkopplung rechnen, so daß die Substrate 72 und 72' vor dem Zusammenfügen auch mit einer zusätzlichen Schicht aus Aluminium bedampft wurden, welche die Leckfelder, wie beschrieben, kurzschließt.

Wie bei Fig. 6 liegen die Austrittsflächen der Strukturen 74 und 74' für den Austritt der Lichtbündel 39 und 39', d.h. die Quellpunkte A und B wieder In der Brennebene einer Linse 64. Diesbezüglich sind hier die gleichen Betrachtungen wie beim Ausführungsbeispiel von Fig. 6 und Fig. 8 maßgeblich.

Die vorstehend gemachten Ausführungen wurden am Beispiel von zwei Lichtbündeln 39 und 39' dargelegt. Die hier vorgestellten Prinzipien sind selbstverständlich auch für mehr als zwei Quellpunkte A_{z} und B_{z} gültig, so daß zum Beispiel mit einer Vierfachanordnung vier Zeilen simultan parallel dargestellt werden können.

Weiterhin liegen in den vorstehend gemachten Ausführungen zu den Ausführungsbeispielen die Quellpunkte A und B in einer Ebene, die zweckmäßigerweise jedoch die optische Achse 67 beinhaltet und deren Flächennormale in Zeilenablenkrichtung weist. Weiterhin haben die Quellpunkte zweckmäßigerweise den gleichen Abstand zur optischen Achse. Damit lassen sich zwei oder mehrere Zeilen in besonders einfacher Weise parallel schreiben.

Die schon früher erörterte Anwendung der bisher dargestellten Verfahrensweise auf die Bildpunkte einer Zeile führt zu einer etwas anderen Anordnung, bei der die Quellpunkte Aₚ und Bₚ in einer Ebene, welche die optische Achse 67 beinhaltet und deren Normale senkrecht zur Zeilenrichtung steht, positioniert sind.

Hier gelten die oben gemachten Ausführungen völlig analog auch für die Bildpunkte einer Zeile. Mit den Quellpunkten Aₚ und Bₚ können zwei oder mehrere Bildpunkte einer Zeile zeitgleich geschrieben werden, wenn die Modulatoren der Lichtquellen 14, 24, 34, der Lichtquellen 44 und 44' entsprechend angesteuert werden und der Zeilenspiegel 41 und der Bildspiegel 42 entsprechend ausgelegt sind. Eine derartige Anordnung dient insbesondere der Leistungsskalierung.

Weiter kann mit dieser Anordnung auch eine Vervielfachung der Bildpunktanzahl einer Zeile erreicht werden. Dies ist insbesondere bei einem digitalen Rastern der Bildpunkte einer Zeile oder bei Anwendung einer synchron zur Darstellung der Bildpunkte gepulsten Lichtquelle vorteilhaft. Weiterhin ist es möglich, die Zahl der Bildpunkte Nₚ innerhalb einer Zeile dadurch zu erhöhen, daß mit dem einen Lichtbündel 39 die Bildpunkte 1 bis 576 geschrieben und mit dem zweiten Lichtbündel 39' die Bildpunkte 577 bis 1152 geschrieben werden.

Weiterhin ist eine Kombination von im Rechteck angeordneten 4 Quellpunkten in der Brennebene 64 der Linse vorteilhaft, von denen zwei Lichtbündel, die zwei Bildpunkte in einer Zeile schreiben, und zwei weitere in Zeilenrichtung versetzte Lichtbündel ausgehen, so daß durch eine entsprechende Ansteuerung der Modulatoren der vier zugehörigen Lichtquellen 44 jeder Bildpunkt seine zu einem Zeitpunkt erforderliche Bildinformation erhält. Damit können in mindestens zwei Zeilen jeweils zwei Bildpunkte verschiedener Intensität und Farbe simultan geschrieben werden. Dazu sind jedoch vier intensitäts- und farbmodulierbare Lichtquellen 44 erforderlich, die durch die elektronische Ansteuereinheit 46 angesteuert werden (siehe Figur 1).

Bei dieser Variante zum gleichzeitigen Rastern von mehr als einer Zeile des Bildes und mehr als eines Bildpunktes in jeder Zeile ergibt sich ferner die Möglichkeit, daß der gemeinsame Punkt 54 für die unterschiedlichen Zeilen zugeordneten Quellpunkte A_{z} und B_{z} an einem anderen Ort auf der optischen Achse 67 liegen kann als der gemeinsame Punkt 54 für die verschiedenen Bildpunkten zugeordneten Quellpunkte Aₚ und Bₚ, indem die Richtungen der von den Quellpunkten ausgehenden Lichtbündel, wie bei Fig. 5 erläutert, geeignet gewählt werden.

Somit ist es zum Beispiel durch die Wahl der Winkel ν_{z} und νₚ möglich, den gemeinsamen Punkt 54 für die Quellpunkte A_{z} und B_{z} auf den Bildspiegel 42 und den gemeinsamen Punkt 54 für die Quellpunkte Aₚ und Bₚ auf den Zeilenspiegel 41 zu legen.

Figur 11 zeigt eine Schaltungsanordnung zur gleichzeitigen Ausgabe von zwei Videozeilen eines Videobildes mittels der Lichtbündel 39 und 39', die von dem Video-Datenstrom E aus einer beliebigen Video-Quelle 100 erzeugt werden.

Der sequentiell in einem Pufferspeicher 101 bildpunkt- und zeilengeordnet abgespeicherte Video-Datenstrom E wird entsprechend der Anzahl der Ausgabekanäle, also der Anzahl der durch die mindestens beiden Lichtbündel 39, 39' gleichzeitig darzustellenden Zeilen, mit Hilfe einer Steuerschaltung 102 auf die hier beispielhaft gezeigten Ausgabekanäle 105 (A) und 106 (B) aufgeteilt.

Die Zwischenspeicher 111 und 121 in jedem der Ausgabekanäle 105 und 106 empfangen die Videodaten, d.h. digitale Werte für die spätere digital-analoge Wandlung zur Ansteuerung der Modulatoren der Lichtquellen 44 und 44' von der Steuerschaltung 102 in Worten der Länge von 24 Bit.

Der Zwischenspeicher 111, FIFO A (FIFO = First in - First out), erhält die dem Ausgabekanal 105 zugeordneten R-G-B-Daten A und der Zwischenspeicher 121, FIFO B, erhält die dem Ausgabekanal 106 zugeordneten R-G-B-Daten B.

Der zeitliche Fluß der ausgehenden R-G-B-Daten A und B ist bei einem asynchron zum eingehenden Videosignal betriebenen Videoprojektionssystem von dem eingehenden Video-Datenstrom E entkoppelt. Die Ausgabe der R-G-B-Daten A und B, die dem jeweiligen Ausgabekanal 105 und 106 zugeordnet sind, erfolgt jedoch zum gleichen Zeitpunkt, wobei der gewünschte Zeilenversatz m_{z}, der von der Steuereinrichtung 102 vorgegeben wird, berücksichtigt ist.

Dabei erfolgt die Ausgabe der Videodaten A+B aus dem Pufferspeicher 101 in Abhängigkeit einer zeitlichen Taktung, die bei asynchronem Betrieb von der Ablenkeinrichtung 107 vorgegeben wird. Die Ausgabe der R-G-B-Daten A und B erfolgt in dem durch m_{z} gegebenen festen Zusammenhang, der durch die Organisation der Zwischenspeicher 111 und 121 bestimmt ist. Mit diesen ist es in Verbindung mit Verfahren zur Aufbereitung eines Videobildes (siehe DE 195 17 357 C1) femer möglich, Video-Daten E verschiedener Videonormen mit einer vorgegebenen Konfiguration von Lichtmodulatoren und Lichtablenkeinrichtungen darzustellen.

Es ist weiter möglich, die R-G-B-Daten A+B sowie die Ablenkeinrichtung 107 synchron zu dem Video-Datenstrom E der Videoquelle zu steuem. In diesem Fall kann der Pufferspeicher 101 entfallen, was den Aufwand verringert.

Zur Gewährleistung einer kontinuierlich ablaufenden, qualitativ hochwertigen Bilddarstellung mit mehr als einem rastemden Lichtbündel ist jedoch eine Zwischenspeicherung einzelner Zeilen mittels der Zwischenspeicher 111 und 121 zweckmäßig. Als Zwischenspeicher 111 wurden wegen der einfachen Ansteuerung bekannte FIFO-Speicher mit geeigneter Speichertiefe ausgewählt. Für HDTV war die erforderliche Speichertiefe pro Zelle beispielsweise 1.440 Bildpunkte multipliziert mit 24 Bit = 34.560 Bit

Im folgenden sei das Beispiel mit der Zeilenabstandszahl m_{z} = 3 näher für den Fall 1 beschrieben. Die Zeilen 1 und 3 müssen dabei zunächst in den Zwischenspeicher 111, der nur für ungerade Zeilenzahlen vorgesehen ist, abgelegt werden.

In diesem Zeitraum wird zunächst nur die Videoinformation der Zeile 2 vom Ausgabekanal 106 zur Modulation des Lichtbündels 39' ausgegeben. Erst wenn die Videoinformation der Zeile 4 im Zwischenspeicher 121 zum Auslesen zur Verfügung steht, erfolgt vom Signal PCLK_OUT gesteuert ein gleichzeitiges Ausgeben der Videodaten A für die 1. Zeile und der Videodaten B für die 4. Zeile an die jeweils drei Digital-Analog-Wandler 112 und 122 jedes Ausgabekanals 105 und 106. An die Digital-Analog-Wandler ist in jedem Ausgabekanal jeweils eine R-G-B-Lichtquelle 44 und 44' angeschlossen, die ihrerseits gemäß dem Beispiel von Figur 1 jeweils drei Modulatoren 14, 24 und 34 aufweisen. Die intensitäts- und farbmodulierten Lichtbündel 39 und 39' werden in der optischen Einrichtung 40 aneinandergeführt und einer Ablenkeinrichtung 107 zugeführt, die im Beispiel nach Figur 1 einen Zeilenspiegel 41 für die Ablenkung in x-Richtung und einen Bildspiegel 42 für die Ablenkung in y-Richtung hat. Nach dem Auslesen der 1. und 4. Zeile folgen die 3. und 6., 5. und 8. Zeile und so weiter.

Die Speichertiefe des Zwischenspeichers 111 im Ausgabekanal 105 beträgt hier demgemäß 2 Zeilen, allgemein beim hier beschriebenen Rasterverfahren m_{z} - 1 Zeilen. Die Speichertiefe für den Zwischenspeicher 121 im Ausgabekanal 106 ist ferner auf 1 Zeile bezogen, allgemein m_{z}- 2 Zeilen.

Durch die gleichzeitige Ausgabe von mehreren Zeilen ergibt sich eine proportional zur Anzahl der gleichzeitig ausgegebenen Zeilen verringerte, dem Signal HSYNC entsprechende Zeilenfrequenz und eine Bildpunktfrequenz gemäß Signal PCLK pro Kanal.

Bei zwei gleichzeitig gerasterten Zeilen halbieren sich die erforderliche Rasterfrequenz und die Modulationsfrequenz zur Darstellung gemäß einer Videonorm. Bei einem System mit einer vorgegebenen Rasterfrequenz verdoppelt sich dementsprechend die Anzahl der pro Zeiteinheit auf dem Bildschirm darstellbaren Zeilen.

Die Schaltung enthält weiterhin die Steuerschaltung 102 für die Zuordnung der R-G-B-Daten A und B in die jeweiligen Zwischenspeicher 111 und 121 und die Steuerung der Zwischenspeicher sowie der Digital-Analog-Wandler 112 und 122.

Die sequentiell eintreffenden R-G-B-Daten A und B werden mit Hilfe der Steuerschaltung 102 zeilenweise in die beiden Zwischenspeicher 111 und 121 eingelesen. Zur Steuerung dienen die Enable-Signale EN_WR-A und EN_WR-B und das Bildpunktetakt-Signal PCLK_IN.

Dieser Teil der Steuerschaltung arbeitet wie eine Multiplexsteuerung, welche wahlweise die Zwischenspeicher 111 und 121 mit den R-G-B-Daten A oder B einer Zeile füllt.

Das Auslesen der beiden Zwischenspeicher 111 und 121 erfolgt gleichzeitig mit den Lesesignalen EN_RD-A und EN_RD-B und dem Signaltakt PCLK_OUT, sobald die R-G-B-Daten A und B an den Ausgängen der beiden Zwischenspeicher 111 und 121 gleichzeitig zur Verfügung stehen.

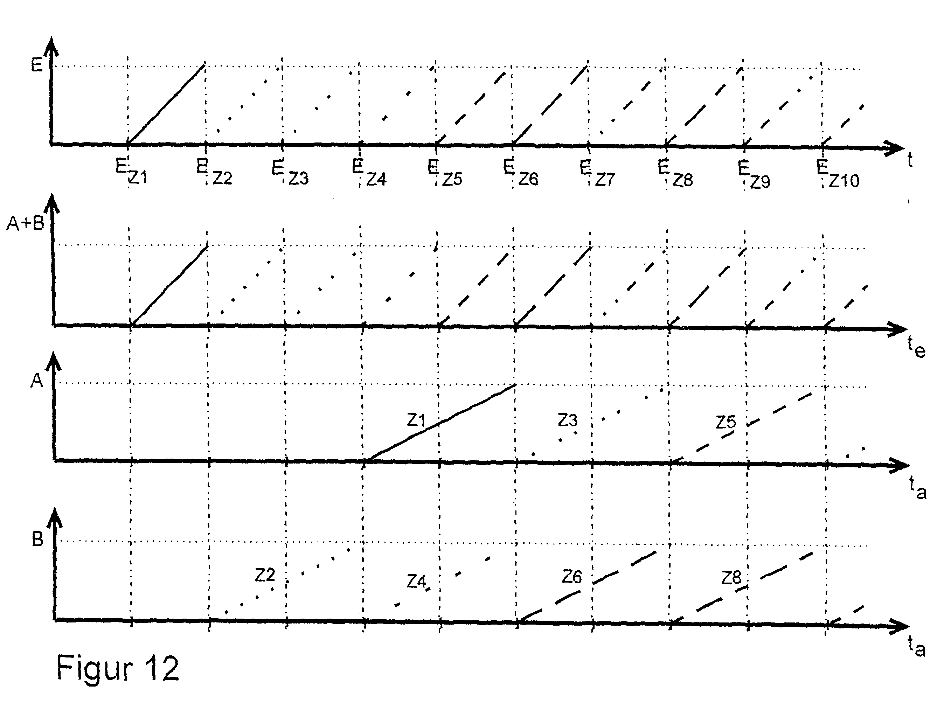

Figur 12 zeigt zur Veranschaulichung den Fluß der Video-Dateninformation E. Außerdem ist der Fluß der R-G-B Daten A+B, A und B dargestellt. Die R-G-B-Daten A und B werden in den Zwischenspeichern 111 und 121 gepuffert und gleichzeitig ausgegeben. Wie in Fig. 11 erkennbar ist, besteht zwischen den R-G-B-Daten A+B und den R-G-B-Daten A und B ein fester zeitlicher Zusammenhang. Dagegen besteht der gezeigte feste Zusammenhang zwischen den Videodaten E und den R-G-B-Daten A und B nur bei einem synchronen Betrieb des Videoprojektionssystems, nicht immer dagegen bei asynchronem Betrieb. Jedoch werden für den asynchronen Fall, im Interesse einer hochwertigen Bilddarstellung, die Zeitbereiche lang genug gewählt, um einen Verlust von Bildinformation praktisch auszuschließen.

Die angegebene Steuerung soll nur beispiethaft verdeutlichen, wie die Signale zur Modulation verschiedener Lichtbündel erzeugt werden können. Auch mit anderen Ansteuerungen kann die Erfindung verwirklicht werden, beispielsweise durch direktes Multiplexen des Ausgangs eines einzigen, ein Videobild zwischenspeichernden Bildspeichers.

Unabhängig von der Art und Weise wie die elektrische Steuerung arbeitet, erlaubt die Vorrichtung gemäß der Erfindung mit den beispielhaft genannten beiden Lichtbündeln zum getrennten Rastem von Zeilen bzw. Bildpunkten in einer Zeile eine Leistungssteigerung und Qualitätsverbesserung für Videobilder. Bei Einsatz von mehr als zwei Lichtbündeln lassen sich die dadurch gewonnenen Vorteile noch besser nutzen. Ferner ist die Erfindung nicht auf die beispielhaft genannten Laser beschränkt. Für die gezeigten Ausführungen ist allein die hohe Parallelität der Lichtbündel wichtig, die sich beim gegenwärtigen Stand der Technik allerdings am besten mit Lasern verwirklichen läßt.

## Patentansprüche

1. Vorrichtung zur Darstellung eines Videobildes mit einer mindestens ein intensitätsmoduliertes Lichtbündel (39, 39') emittierenden Quelle (44, 44') sowie einer Ablenkeinrichtung (41, 42) zum Ablenken des Lichtbündels (39, 39'), sowohl zum winkelproportionalen Rastern von Nₚ Bildpunkten in Zeilen über einen Winkel αₚ als auch zum winkelproportionalen Rastern des Lichtbündels (39, 39') von N_{z} Zeilen des Videobildes über einen Winkel α_{z}, **dadurch gekennzeichnet, daß** die Quelle (44, 44') zwei unabhängig voneinander modulierbare Lichtbündel (39, 39') emittiert, von denen das erste (39) mit der Videoinformation zum Beleuchten eines jeweils durch Rastern angesteuerten ersten Bildpunktes und das zweite mit der Videoinformation zum Beleuchten eines zweiten Bildpunktes moduliert sind, wobei die Videoinformation des zweiten Bildpunktes gegenüber der Videoinformation des ersten Bildpunktes um m_{z} Zeilen eines Bildes und mₚ Bildpunkte einer Zeile, mit ganzen Zahlen m_{z} ≤ N_{z} und mₚ ≤ Nₚ sowie m_{z} und/oder mₚ ≠ 0, versetzt ist, und daß ein optisches System (40) vorgesehen ist, das die beiden Lichtbündel (39, 39') an einem gemeinsamen, in Lichtausbreitungsrichtung vor oder innerhalb der Ablenkeinrichtungen gelegenen reellen oder virtuellen Punkt (54) zusammenführt, von dem aus die beiden Lichtbündel (39, 39') unter einem vorgegebenen Winkel m_{z} × α_{z}/N_{z} in Bildrasterrichtung sowie mₚ × αₚ/Nₚ in Zeilenrasterrichtung auseinanderlaufen.

2. Vorrichtung nach Anspruch 1, **gekennzeichnet durch** einen Bildspeicher (80), aus dem die jeweiligen Zeilen für das erste und das zweite Lichtbündel (39, 39') synchron auslesbar sind, und eine Steuereinrichtung (88), zum Steuern der Quellen und/oder der Ablenkeinrichtung, um jede Zeile des Videobildes jeweils ausschließlich **durch** eines der beiden Lichtbündel (39, 39') zu rastem.

3. Vorrichtung nach Anspruch 1 oder 2, **dadurch gekennzeichnet, daß** m_{z} ≠ 0 ist und das erste Lichtbündel (39) nur über ungerade oder nur über gerade Zeilenzahlen geführt ist und die Zahl m_{z} ungerade ist.

4. Vorrichtung nach Anspruch 1, **dadurch gekennzeichnet, daß** das erste Lichtbündel (39) zum Rastern eines vollständigen Bildes über fortlaufende Zeilenzahlen und Bildpunktzahlen geführt wird.

5. Vorrichtung nach einem der Ansprüche 1 bis 4, **dadurch gekennzeichnet, daß** die Ablenkeinrichtung (41, 42) einen Polygonspiegel (41) für das Rastem von Nₚ Bildpunkten in Zeilenrichtung aufweist und der gemeinsame Punkt (54) der Lichtbündel auf der jeweiligen ablenkenden Facette des Polygonspiegels (41) liegt.

6. Vorrichtung nach einem der Ansprüche 1 bis 4, **dadurch gekennzeichnet, daß** die Ablenkeinrichtung (41, 42) für das Rastern von N_{z} Zeilen des Videobildes einen Schwenkspiegel (42) aufweist und der gemeinsame Punkt (54) auf der Oberfläche dieses Schwenkspiegels (42) liegt.

7. Vorrichtung nach einem der Ansprüche 1 bis 6, **dadurch gekennzeichnet, daß** für jedes der Lichtbündel (39, 39') ein Lichtleiter (66, 66', 74) vorgesehen ist, in den es von der Quelle aus eingeleitet ist, daß die ausgangsseitigen Enden der Lichtleiter (66, 66', 74) unter einem Abstand befestigt sind, und daß ausgangsseitig nachfolgend eine fokussierende Einrichtung (64) vorgesehen ist, in deren eingangsseitiger Brennebene die Ausgänge der Lichtleitfasern (66, 66', 74) liegen, wodurch das Licht aus dem jeweiligen Lichtleiter (66, 66', 74) einerseits parallelisiert ist und andererseits die beiden Lichtbündel (39, 39') unter Bildung der vorgegebenen Winkel αₚ und α_{z} in einem Punkt (54) zusammengeführt sind.

8. Vorrichtung nach Anspruch 7, **dadurch gekennzeichnet, daß** mindestens ein Lichtleiter ausgangsseitig unter einem Winkel zur optischen Achse angeordnet ist, der betragsmäßig kleiner als 30° und insbesondere kleiner als 1° ist.

9. Vorrichtung nach Anspruch 7 oder 8, **dadurch gekennzeichnet, daß** die Lichtleiter (66, 66') in einem integriert-optischen Bauelement (38') vorgesehen sind.

10. Vorrichtung nach einem der Ansprüche 7 bis 9, **dadurch gekennzeichnet, daß** der Abstand zwischen den Ausgängen der Lichtleiter (66, 66', 74) größer als 10 µm, insbesondere größer als 30 µm, und kleiner als 1 mm ist.

11. Vorrichtung nach einem der Ansprüche 7 bis 9, **dadurch gekennzeichnet, daß** die Lichtleiter (66, 66') Kem und Mantel aufweisende Lichtleitfasern sind, die ausgangsseltig zusammengefügt sind, wobei die Mäntel an der Stelle zum Zusammenfügen abgeflacht sind, so daß die Kerne der beiden Lichtleitfasern ausgangsseitlg einen Abstand größer als 10 µm aufweisen.

12. Vorrichtung nach einem der Ansprüche 1 bis 11, **dadurch gekennzeichnet, daß** die Ablenkeinrichtung einen in zwei Richtungen beweglichen Spiegel aufweist, auf dessen Oberfläche beide Lichtbündel (39, 39') in dem gemeinsamen Punkt (54) unter dem vorgegebenen Winkel zusammenlaufen, von dem aus dann die Lichtbündel (39, 39') reflektiert werden, und daß ein Antrieb für eine spiralförmige Bewegung des beweglichen Spiegels vorgesehen ist, wobei die Zeilen für die Größe m_{z} radial und die Bildpunkte für die Größe mₚ in Fortschreitrichtung der so gerasterten Spirale gezählt sind.

13. Vorrichtung nach Anspruch 1, **dadurch gekennzeichnet, daß** die Quelle vier unabhängig voneinander modulierbare Lichtbündel (39, 39') emittiert, von denen zwei Lichtbündel (39, 39') verschiedene Bildpunkte unter einem Winkel αₚ einer ersten Zeile eines Bildes schreiben und die zwei anderen Lichtbündel verschiedene Bildpunkte unter einem Winkel αₚ in einer zweiten Zeile, die gegenüber der ersten Zeile um m_{z} Zeilen versetzt ist, schreiben.

14. Vorrichtung nach Anspruch 13, **dadurch gekennzeichnet, daß** die Quellpunkte der Lichtbündel (39, 39') in Lichtrichtung gesehen auf einer Brennebene einer optischen Einrichtung im Rechteck angeordnet sind.

15. Herstellungsverfahren für eine Vorrichtung nach den Ansprüchen 1 bis 14 zur Darstellung eines Videobildes, für die eine mindestens ein intensitätsmoduliertes Lichtbündel (39, 39') emittierende Quelle (44, 44') sowie eine Ablenkeinrichtung (41, 42), sowohl zum winkelproportionalen Rastem von Nₚ Bildpunkten in Zeilen über einen Winkel αₚ als auch zum winkelproportionalen Rastern von N_{z} Zeilen des Videobildes über einen Winkel α_{z} des Lichtbündels (39, 39'), vorgesehen werden, **dadurch gekennzeichnet, daß** die Quelle (44, 44') für das Emittieren zweier unabhängig voneinander modulierbarer Lichtbündel (39, 39') ausgebildet wird, von denen das erste mit der Videoinformation zum Beleuchten eines jeweils durch Rastern angesteuerten ersten Bildpunktes und das zweite mit der Videoinformation zum Beleuchten eines zweiten Bildpunktes, wobei die Videoinformation des zweiten Bildpunktes gegenüber der des ersten Bildpunktes um m_{z} Zeilen eines Bildes und mₚ Bildpunkte in einer Zeile versetzt ist, mit ganzen Zahlen m_{z} ≤ N_{z} und mₚ ≤ Nₚ sowie m_{z} und/oder mₚ ≠ 0, moduliert werden, daß ein optisches System (40) vorgesehen wird, das die beiden Lichtbündel (39, 39') an einem gemeinsamen, in Lichtausbreitungsrichtung vor oder innerhalb der Ablenkeinrichtung gelegenen reellen oder virtuellen Punkt (54) zusammenführt, von dem aus die beiden Lichtbündel (39, 39') unter einem vorgegebenen Winkel der Größe m_{z} × α_{z}/N_{z} in Bildrasterrichtung sowie mₚ × αₚ/Nₚ In Zeilenrasterrichtung auseinanderlaufen, und daß die Ablenkeinrichtung (41, 42) bezüglich der beiden Lichtbündel (39, 39) für das synchrone Rastem der beiden Lichtbündel (39, 39') über diejenigen Bildpunkte, für welche die Lichtbündel (39, 39') jeweils intensitätsmoduliert sind, angeordnet wird.

16. Verfahren zur Darstellung eines Videobildes, bei dem mindestens ein intensitätsmoduliertes Lichtbündel (39, 39') aus einer Quelle (44, 44') emittiert sowie mittels einer Ablenkeinrichtung (41, 42), sowohl zum winkelproportionalen Rastern von Nₚ Bildpunkten in Zeilen über einen Winkel αₚ als auch zum winkelproportionalen Rastem von N_{z} Zeilen des Bildes über einen Winkel α_{z}, abgelenkt wird, **dadurch gekennzeichnet, daß** von der Quelle (44, 44') zwei Lichtbündel (39, 39') emittiert werden, von denen das erste (39) mit der Videoinformation zum Beleuchten eines jeweils durch Rastern angesteuerten ersten Bildpunktes und das zweite (39') mit der Videoinformation eines zweiten Bildpunktes,
wobei die Videoinformation des zweiten Bildpunktes gegenüber der des ersten Bildpunktes um m_{z} Zeilen und mₚ Bildpunkte versetzt ist, mit ganzen Zahlen m_{z} ≤ N_{z} und mₚ ≤ Nₚ sowie m_{z} und/oder mₚ ≠ 0, moduliert werden und daß die beiden Lichtbündel (39, 39') mittels eines optischen Systems (40) an einem gemeinsamen, in Lichtausbreitungsrichtung vor oder innerhalb der Ablenkeinrichtung (41, 42) gelegenen reellen oder virtuellen Punkt (54) zusammengeführt werden, von dem aus die beiden Lichtbündel (39, 39') unter einem vorgegebenen Winkel der Größe m_{z} × α_{z}/N_{z} in Bildrasterrichtung sowie mₚ × αₚ/Nₚ in Zeilenrasterrichtung auseinanderlaufen.

## Claims

1. A device for displaying a video image comprising a source (44, 44') emitting at least one intensity-modulated light bundle (39, 39') as well as a deflecting device (41, 42) for deflecting the light bundle (39, 39'), both for the angle-proportional scanning of Nₚ image points in lines over an angle αₚ and for the angle-proportional scanning of the light bundle (39, 39') of N_{z} lines of the video image over an angle α_{z}, **characterized in that** said source (44, 44') emits two light bundles (39, 39') which can be modulated independently from one another, the first (39) being modulated with the video information for the illumination of a first image point controlled by raster scanning and the second being modulated with the video information for the illumination of a second image point, wherein the video information of the second image point is offset relative to the video information of the first image point by m_{z} lines of an image and mₚ image points of a line with integers m_{z} ≤ N_{z} and mₚ ≤ Nₚ, and m_{z} and/or mₚ ≠ 0, and **in that** an optical system (40) is provided which combines the two light bundles (39, 39') at a common real or virtual point (54) situated in front of or inside the deflecting devices in the direction of light propagation, the two light bundles (39, 39') diverge proceeding from this real or virtual point at a predetermined angle m_{z} x α_{z}/N_{z} in the image scanning direction and at a predetermined angle mₚ x αₚ/Nₚ in the line scanning direction.

2. The device according to claim 1, **characterized by** an image storage (80) from which the respective lines for the first light bundle and second light bundle (39, 39') can be read out synchronously, and a control device (88) for controlling the sources and/or the deflecting device in order to scan every line of the video image exclusively in each instance by means of one of the two light bundles (39, 39').

3. The device according to claim 1 or claim 2, **characterized in that** m_{z} ≠ 0, and the first light bundle (39) is guided only over odd line numbers or only over even line numbers and the number m_{z} is odd.

4. The device according to claim 1, **characterized in that** the first light bundle (39) is guided over consecutive line numbers and image point numbers for raster scanning a complete image.

5. The device according to any one of claims 1 to 4, **characterized in that** the deflecting device (41, 42) comprises a polygon mirror (41) for scanning Nₚ image points in the line direction and that the common point (54) of the light bundles lies on the respective deflecting facet of the polygon mirror (41).

6. The device according to any one of claims 1 to 4, **characterized in that** the deflecting device (41, 42) comprises a swivel mirror (42) for the raster scanning of N_{z} lines of the video image, and that the common point (54) lies on the surface of the swivel mirror (42).

7. The device according to any one of claims 1 to 6, **characterized in that** a light guide (66, 66', 74) is provided for each light bundle (39, 39), the light bundle being introduced into the light guide from the source, **in that** the output side ends of the light guides (66, 66', 74) are fixed at a distance, and **in that** a focussing device (64) is provided following the light guide on the output side, wherein the outputs of the light-conducting fibers (66, 66', 74) lie in the input-side focal plane of the focussing device so that the light from the respective light guide (66, 66', 74) is parallelized on the one hand and the two light bundles (39, 39') are combined in a point (54) on the other hand while forming the predetermined angles αₚ and α_{z}.

8. The device according to claim 7, **characterized in that** at least one light guide is arranged on the output side at an angle to the optical axis of less than 30° and, in particular, less than 1°.

9. The device according to claim 7 or claim 8, **characterized in that** the light guides (66, 66') are provided in an integrated optical component (38').

10. The device according to any one of claims 7 to 9, **characterized in that** the distance between the outputs of the light guides (66, 66', 74) is greater than 10 µm, in particular greater than 30 µm, and less than 1 mm.

11. The device according to any one of claims 7 to 9, **characterized in that** the light guides (66, 66') are light-conducting fibers having a core and a cladding, said light-conducting fibers being joined on the output side, wherein the cladding of each light-conducting fiber is flattened at the location for joining, so that the cores of the two light-conducting fibers have a distance of greater than 10 µm between them on the output side.

12. The device according to any one of claims 1 to 11, **characterized in that** the deflecting device comprises a mirror which is movable in two directions, both light bundles (39, 39') being joined on the surface of this mirror at the predetermined angle at the common point (54), from which the light bundles (39, 39') are reflected, and **in that** a drive is provided for a spiral movement of the movable mirror, wherein the lines for quantity m_{z} are counted radially and the image points for quantity mₚ are counted in the progressing direction of the spiral scanned in this manner.

13. The device according to claim 1, **characterized in that** the source emits four light bundles (39, 39') which can be modulated independently from one another, two of which light bundles (39, 39') write different image points at an angle αₚ of a first line of an image, and the other two light bundles write different image points at an angle αₚ in a second line which is offset relative to the first line by m_{z} lines.

14. The device according to claim 13, **characterized in that** the source points of the light bundles (39, 39') as seen in the direction of light are arranged on a focal plane of an optical device in a rectangle.

15. A production process for a device for displaying a video image according to any one of claims 1 to 14, for which a source (44, 44') emitting at least one intensity-modulated light bundle (39, 39') and a deflecting device (41, 42) for angle-proportional scanning of Nₚ image points in lines over an angle αₚ and for angle-proportional scanning of N_{z} lines of the video image over an angle α_{z} of the light bundle (39, 39') are provided, **characterized in that** the source (44, 44') is designed for the emission of two light bundles (39, 39') which can be modulated independently from one another, the first of said light bundles being modulated with the video information for the illumination of a first image point controlled by raster scanning and the second light bundle being modulated with the video information for the illumination of a second image point, wherein said video information of the second image point is offset relative to that of the first image point by m_{z} lines of an image and mₚ image points in a line, with integers m_{z} ≤ Nₚ and mₚ ≤ Nₚ, and m_{z} and/or mₚ ≠ 0, **in that** an optical system (40) is provided which combines the two light bundles (39, 39') at a common real or virtual point (54) situated in front of or inside the deflecting device in the direction of light propagation, proceeding from which real or virtual point the two light bundles (39, 39') diverge at a predetermined angle m_{z} x α_{z}/N_{z} in the image scanning direction and at a predetermined angle mₚ x αₚ/Nₚ in the line scanning direction, and **in that** the deflecting device (42, 42) is arranged with respect to the two light bundles (39, 39') for synchronous raster scanning of the two light bundles (39, 39') over those image points for which the light bundles (39, 39') are respectively intensity-modulated.

16. A method for displaying a video image in which at least one intensity-modulated light bundle (39, 39') is emitted from a source (44, 44') and is deflected by means of a deflecting device (41, 42) for angle-proportional scanning of Nₚ image points in lines over an angle αₚ and for angle-proportional scanning of N_{z} lines of the image over an angle a_{z}, **characterized in that** two light bundles (39, 39') are emitted from the source (44, 44'), the first (39) being modulated with the video information for the illumination of a first image point controlled by raster scanning and the second (39') light bundle being modulated with the video information of a second image point, wherein the video information of the second image point is offset relative to that of the first image point by m_{z} lines and mₚ image points, with integers m_{z} ≤ N_{z} and mₚ ≤ Nₚ, and m_{z} and/or mₚ ≠ 0; and **in that** the two light bundles (39, 39') are combined by means of an optical system (40) at a common real or virtual point (54) situated in front of or inside the deflecting device (41, 42) in the direction of light propagation, proceeding from which real or virtual point the two light bundles (39, 39') diverge at a predetermined angle m_{z} x α_{z}/N_{z} in the image scanning direction and at a predetermined ansgle mₚ x αₚ/Nₚ in the line scanning direction.

## Revendications

1. Dispositif pour représenter une image vidéo comportant une source (44, 44') émettant au moins un faisceau lumineux (39, 39') modulé en intensité, ainsi qu'un dispositif de déviation (41, 42) pour dévier le faisceau lumineux (39, 39'), aussi bien pour le balayage proportionnel angulairement de Nₚ points d'image en ligne, sur un angle αₚ que pour le balayage proportionnel du faisceau lumineux (39, 39') de N_{z} lignes de l'image vidéo, sur un angle α_{z}, **caractérisé en ce que** la source (44, 44') émet deux faisceaux lumineux (39, 39') qui peuvent être modulés indépendamment l'un de l'autre, dont le premier (39) est modulé avec l'information vidéo pour l'éclairage d'un premier point d'image, commandé par balayage, et le deuxième faisceau lumineux est modulé avec l'information vidéo pour l'éclairage d'un deuxième point d'image, l'information vidéo du deuxième point d'image étant décalée par rapport à l'information vidéo du premier point d'image de m_{z} lignes d'une image et mₚ points d'image d'une ligne, avec des nombres entiers m_{z} ≤ N_{z} et mₚ ≤ Nₚ ainsi que m_{z} et/ou mₚ ≠ 0, et **en ce qu'**il est prévu un système optique (40) qui réunit les deux faisceaux (39, 39') en un point (54) commun, réel ou virtuel, situé, dans le sens de propagation de la lumière, devant ou à l'intérieur des dispositifs de déviation, à partir duquel les deux faisceaux lumineux (39, 39') s'écartent l'un de l'autre suivant un angle donné m_{z} x α_{z}/Nₚ dans la direction du balayage de l'image ainsi que mₚ x αₚ/Nₚ dans le sens du balayage des lignes.

2. Dispositif selon la revendication 1, **caractérisé par** une mémoire d'image (80) de laquelle on peut extraire les lignes respectives pour le premier et le deuxième faisceau lumineux (39, 39'), de manière synchrone, et par un dispositif de commande (88) pour commander les sources et/ou le dispositif de déviation, afin de balayer chaque ligne de l'image vidéo exclusivement au moyen de l'un des deux faisceaux lumineux (39, 39').

3. Dispositif selon la revendication 1 ou 2, **caractérisé en ce que** m_{z} ≠ 0 et le premier faisceau lumineux (39) ne passe que sur des nombres impairs de lignes ou seulement sur des nombres pairs de lignes et le nombre m_{z} est impair.

4. Dispositif selon la revendication 1, **caractérisé en ce que** pour balayer une image complète, le premier faisceau lumineux (39) est guidé sur des nombres de lignes et des nombres de points d'image continus.

5. Dispositif selon l'une des revendications 1 à 4, **caractérisé en ce que** le dispositif de déviation (41, 42) comporte un miroir polygonal (41) pour le balayage de Nₚ points d'image dans la direction des lignes, et le point (54) commun des faisceaux lumineux se situe sur la facette de déviation respective du miroir polygonal (41).

6. Dispositif selon l'une des revendications 1 à 4, **caractérisé en ce que** pour le balayage de N_{z} lignes de l'image vidéo, le dispositif de déviation (41, 42) comporte un miroir pivotant (42), et le point commun (54) se situe sur la surface de ce miroir pivotant (42).

7. Dispositif selon l'une des revendications 1 à 6, **caractérisé en ce que** pour chacun des faisceaux lumineux (39, 39') il est prévu un guide de lumière (66, 66', 74) dans lequel il est introduit à partir de la source, **en ce que** les extrémités côté sortie des guides de lumière (66, 66', 74) sont fixées à distance, et **en ce que** côté sortie il est prévu ensuite un dispositif de focalisation (64) dans le plan focal duquel, côté entrée, se situent les sorties des fibres optiques (66, 66', 74), ce qui fait que la lumière provenant du guide de lumière (66, 66', 74) respectif est d'une part parallélisée et d'autre part les deux faisceaux lumineux (39, 39') sont réunis en un point (54) en formant les angles αₚ et α_{z} prescrits.

8. Dispositif selon la revendication 7, **caractérisé en ce qu'**au moins un guide de lumière est disposé côté sortie par rapport à l'axe optique suivant un angle dont la valeur absolue est inférieure à 30° et en particulier inférieure à 1°.

9. Dispositif selon la revendication 7 ou 8, **caractérisé en ce que** les guides de lumière (66, 66') sont prévus dans un composant optique (38') intégré.

10. Dispositif selon l'une des revendications 7 à 9, **caractérisé en ce que** la distance entre les sorties des guides de lumière (66, 66', 74) est supérieure à 10 µm, en particulier supérieure à 30 µm et inférieure à 1 mm.

11. Dispositif selon l'une des revendications 7 à 9, **caractérisé en ce que** les guides de lumière (66, 66') sont des fibres optiques qui présentent un coeur et une gaine et qui sont assemblés côté sortie, les gaines étant aplaties à l'emplacement de l'assemblage, ce qui fait que les coeurs des deux fibres optiques présentent côté sortie une distance supérieure à 10 µm.

12. Dispositif selon l'une des revendications 1 à 11, **caractérisé en ce que** le dispositif de déviation comporte un miroir déplaçable dans deux directions sur la surface duquel les deux faisceaux lumineux (39, 39') se réunissent dans le point commun (54), suivant l'angle prescrit, à partir duquel les faisceaux lumineux (39, 39') sont ensuite réfléchis, et **en ce qu'**il est prévu un dispositif d'entraînement pour un mouvement en spirale du miroir mobile, les lignes pour la grandeur m_{z} étant comptées radialement et les points d'image pour la grandeur mₚ étant comptés dans le sens de progression de la spirale ainsi analysée.

13. Dispositif selon la revendication 1, **caractérisé en ce que** la source émet quatre faisceaux lumineux (39, 39') modulables indépendamment les uns des autres, dont deux faisceaux lumineux (39, 39') inscrivent des points d'image différents selon un angle αₚ d'une première ligne d'une image, et les deux autres faisceaux lumineux inscrivent différents points d'image suivant un angle αₚ dans une deuxième ligne qui est décalée de m_{z} lignes par rapport à la première ligne.

14. Dispositif selon la revendication 13, **caractérisé en ce que** les points de source des faisceaux lumineux (39, 39') vus dans le sens de la lumière, sont disposés en rectangle sur un plan focal d'un dispositif optique.

15. Procédé de fabrication d'un dispositif selon les revendications 1 à 14 pour la représentation d'une image vidéo, pour lequel sont prévus une source (44, 44') émettant au moins une faisceau lumineux (39, 39' modulé en intensité ainsi qu'un dispositif de déviation (41, 42), aussi bien pour le balayage proportionnel angulairement de Nₚ d'images dans des lignes, suivant un angle (αₚ), que pour le balayage proportionnel angulairement de N_{z} lignes de l'image vidéo suivant un angle α_{z} du faisceau lumineux (39, 39'), **caractérisé en ce que** la source (40, 44') est conçue pour émettre deux faisceaux lumineux (39, 39') modulables indépendamment l'un de l'autre, dont le premier est modulé avec l'information vidéo pour l'éclairage d'un premier point d'image, commandé par balayage et le deuxième faisceau lumineux est modulé avec l'information vidéo pour l'éclairage d'un deuxième point d'image, l'information vidéo du deuxième point d'image étant décalée, par rapport au premier point d'image, de m_{z} lignes d'une image et de mₚ points d'image dans une ligne, avec des nombres entiers m_{z} ≤ N_{z} et mₚ ≤ Nₚ ainsi que m_{z} et/ou mₚ ≠ 0, et **en ce qu'**il est prévu un système optique (40) qui réunit les deux faisceaux (39, 39') en un point (54) commun, réel ou virtuel, situé, dans le sens de propagation de la lumière, devant ou à l'intérieur des dispositifs de déviation, à partir duquel les deux faisceaux lumineux (39, 39') s'écartent l'un de l'autre suivant un angle donné de valeur m_{z} x α_{z}/N_{z} dans la direction du balayage de l'image ainsi que de mₚ x αₚ/Nₚ dans le sens du balayage des lignes, et **en ce que** le dispositif de déviation (41, 42) est disposé par rapport aux deux faisceaux lumineux (39, 39'), pour le balayage synchrone des deux faisceaux lumineux (39, 39'), au-dessus des points d'image pour lesquels les faisceaux lumineux (39, 39') sont modulés en intensité.

16. Procédé de représentation d'une image vidéo dans lequel au moins un faisceau lumineux (39, 39') modulé en intensité est émis à partir d'une source (44, 44') et est dévié, au moyen d'un dispositif de déviation (41, 42), aussi bien pour le balayage proportionnel angulairement de Nₚ points d'image dans des lignes, suivant un angle αₚ, que pour le balayage proportionnel angulairement de N_{z} lignes de l'image suivant un angle α_{z}, **caractérisé en ce que** la source (44, 44') émet deux faisceaux lumineux (39, 39'), modulables indépendamment l'un de l'autre, dont le premier est modulé avec l'information vidéo pour l'éclairage d'un premier point d'image, commandé par balayage et le deuxième faisceau lumineux est modulé avec l'information vidéo pour l'éclairage d'un deuxième point d'image, l'information vidéo du deuxième point d'image étant décalée, par rapport au premier point d'image, de m_{z} lignes d'une image et de mₚ points d'image dans une ligne, avec des nombres entiers m_{z} ≤ N_{z} et mₚ ≤ Nₚ ainsi que m_{z} et/ou mₚ ≠ 0, et **en ce qu'**il est prévu un système optique (40) qui réunit les deux faisceaux (39, 39') en un point (54) commun, réel ou virtuel, situé, dans le sens de propagation de la lumière, devant ou à l'intérieur des dispositifs de déviation, à partir duquel les deux faisceaux lumineux (39, 39') s'écartent l'un de l'autre suivant un angle donné de valeur m_{z} x α_{z}/N_{z} dans la direction du balayage de l'image ainsi que mₚ x αₚ/Nₚ dans le sens du balayage des lignes.
